(19) **Europäisches Patentamt / European Patent Office / Office européen des brevets**

(11) **EP 4 589 542 A1**

(12) **EUROPEAN PATENT APPLICATION**
published in accordance with Art. 153(4) EPC

(43) Date of publication:
**23.07.2025 Bulletin 2025/30**

(21) Application number: **23922392.8**

(22) Date of filing: **13.11.2023**

(51) International Patent Classification (IPC):
**G06T 13/40** (2011.01)

(52) Cooperative Patent Classification (CPC):
**G06T 13/40**

(86) International application number:
**PCT/CN2023/131147**

(87) International publication number:
**WO 2024/169276 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.02.2023 CN 202310163986**

(71) Applicant: **Tencent Technology (Shenzhen) Company Limited**
**Shenzhen, Guangdong 518057 (CN)**

(72) Inventors:
• **YE, Zelin**
  **Shenzhen, Guangdong 518057 (CN)**
• **JIA, Xiya**
  **Shenzhen, Guangdong 518057 (CN)**
• **FU, Xinghui**
  **Shenzhen, Guangdong 518057 (CN)**
• **SUN, Zhongqian**
  **Shenzhen, Guangdong 518057 (CN)**

(74) Representative: **EP&C**
**P.O. Box 3241**
**2280 GE Rijswijk (NL)**

(54) **TRAJECTORY INFORMATION PROCESSING METHOD AND APPARATUS, AND COMPUTER DEVICE AND READABLE STORAGE MEDIUM**

(57) A trajectory information processing method, comprising: acquiring respective limb trajectory information of at least two first limbs of a first object, wherein the at least two first limbs of the first object correspond to at least two second limbs of a second object on a one-to-one basis (S202); transferring the limb trajectory information from each first limb of the first object to a corresponding second limb of the second object, so as to obtain initial trajectory information of each second limb (S204); on the basis of the limb trajectory information of each first limb, determining limb pose information of each first limb and limb interaction information between the at least two first limbs (S206); pre-correcting the initial trajectory information of each second limb, so as to obtain predicted pose information of each second limb, and predicted interaction information between the at least two second limbs (S208); according to the limb pose information and the predicted pose information, determining single-limb constraint information between each first limb and the corresponding second limb (S210); according to the limb interaction information and the predicted interaction information, determining limb interaction constraint information between the first object and the second object (S212); and on the basis of each piece of single-limb constraint information and the limb interaction constraint information correcting the initial trajectory information of each second limb, so as to obtain target trajectory information of each second limb (S214).

EP 4 589 542 A1

S202

Obtain respective limb trajectory information of at least two first limbs of a first object, where the at least two first limbs of the first object correspond to at least two second limbs, respectively, of a second object

S204

Migrate the limb trajectory information of each first limb to the respective second limb of said first limb to obtain initial trajectory information of each second limb

S206

Determine, according to the limb trajectory information of each first limb, limb pose information of each first limb and limb coordination information among the at least two first limbs

S208

Pre-correct the initial trajectory information of each second limb to obtain predicted pose information of each second limb and predicted coordination information among the at least two second limbs

S210

Determine a single-limb constraint between each first limb and the respective second limb of said first limb according to the limb pose information of said first limb and the predicted pose information of the respective second limb

S212

Determine a limb-coordination constraint between the first object and the second object according to the limb coordination information and the predicted coordination information

S214

Correct the initial trajectory information of all second limbs according to the single-limb constraint of each second limb and the limb-coordination constraint to obtain corrected trajectory information of each second limb

FIG. 2

## Description

This application claims priority to Chinese Patent Application No. 2023101639863, filed with the China National Intellectual Property Administration on February 15, 2023, and entitled "METHOD AND APPARATUS FOR PROCESSING TRAJECTORY INFORMATION, COMPUTER DEVICE, AND READABLE STORAGE MEDIUM".

FIELD OF THE TECHNOLOGY

The present disclosure relates to the field of computer technologies, and in particular, to a method and an apparatus for processing trajectory information, a computer device, a computer-readable storage medium, and a computer program product.

BACKGROUND OF THE DISCLOSURE

With the development of computer technologies, an animation retargeting technology emerges. The animation retargeting is intended to migrate an existing animation resource to a new character, to improve animation production efficiency. For example, a foot trajectory of character A is migrated to character B, so that a corresponding foot trajectory does not need to be separately produced for each character.

In conventional animation retargeting technology, each leg of a character is independently processed, a foot trajectory of each leg of the character is subject to uniform scaling according to lengths of the legs of two characters, and the foot trajectory obtained through the scaling serves the foot trajectory of a new character.

The foot trajectory obtained through scaling and migration using the lengths of the limbs of the characters does not consider coordination between the limbs of the same character. Consequently, migration of the foot trajectory is inaccurate.

SUMMARY

According to embodiments provided in the present disclosure, a method and an apparatus for processing trajectory information, a computer device, a computer-readable storage medium, and a computer program product are provided.

According to an aspect, the present disclosure provides a method for processing trajectory information, performed by a computer device. The method comprises: obtaining respective limb trajectory information of at least two first limbs of a first object, where the at least two first limbs of the first object correspond to at least two second limbs, respectively, of a second object; migrating the limb trajectory information of each first limb to the respective second limb of such first limb to obtain initial trajectory information of each second limb; determining, according to the limb trajectory information of each first limb, limb pose information of each first limb and limb coordination information among the at least two first limbs; pre-correcting the initial trajectory information of each second limb to obtain predicted pose information of each second limb and predicted coordination information among the at least two second limbs; determining a single-limb constraint between each first limb and the respective second limb of such first limb according to the limb pose information of such first limb and the predicted pose information of the respective second limb; determining a limb-coordination constraint between the first object and the second object according to the limb coordination information and the predicted coordination information; and correcting the initial trajectory information of all second limbs according to the single-limb constraint of each second limb and the limb-coordination constraint to obtain corrected trajectory information of each second limb.

According to another aspect, the present disclosure further provides an apparatus for processing trajectory information. The apparatus comprises: a migration module, configured to: obtain respective limb trajectory information of at least two first limbs of a first object, where the at least two first limbs of the first object correspond to at least two second limbs, respectively, of a second object; and migrate the limb trajectory information of each first limb to the respective second limb of such first limb to obtain initial trajectory information of each second limb; a prediction module, configured to: determine, according to the limb trajectory information of each first limb, limb pose information of each first limb and limb coordination information among the at least two first limbs; and pre-correct the initial trajectory information of each second limb to obtain predicted pose information of each second limb and predicted coordination information among the at least two second limbs; a first generation module, configured to determine a single-limb constraint between each first limb and the respective second limb of such first limb according to the limb pose information of such first limb and the predicted pose information of the respective second limb; a second generation module, configured to determine a limb-coordination constraint between the first object and the second object according to the limb coordination information and the predicted coordination information; and a correction module, configured to correct the initial trajectory information of all second limbs according to the single-limb constraint of each second limb and the limb-coordination constraint to obtain corrected trajectory information of each second limb.

According to another aspect, the present disclosure further provides a computer device. The computer device comprises a memory and a processor. The memory has computer-readable instructions stored therein. The processor, when executing the computer-readable instructions, implements the operations in the method embodiments of the present disclosure.

According to another aspect, the present disclosure further provides a computer-readable storage medium. The computer-readable storage medium has computer-readable instructions stored therein. The computer-readable instructions, when executed by a processor, implement the operations in the method embodiments of the present disclosure.

According to another aspect, the present disclosure further provides a computer program product. The computer program product includes computer-readable instructions. The computer-readable instructions, when executed by a processor, implement the operations in the method embodiments in the present disclosure.

Details of one or more embodiments of the present disclosure are provided in the accompanying drawings and descriptions below. Other features and advantages of the present disclosure become apparent with reference to the specification, the accompanying drawings, and the claims.

BRIEF DESCRIPTION OF THE DRAWINGS

To describe the technical solutions in embodiments of the present disclosure or the related art more clearly, the following briefly describes the accompanying drawings required for describing the embodiments or the related art. Apparently, the accompanying drawings in the following descriptions show merely some embodiments of the present disclosure, and a person of ordinary skill in the art may still derive other drawings from these accompanying drawings without creative efforts.

FIG. 1 is a diagram of an application environment of a method for processing trajectory information according to an embodiment of the present disclosure.

FIG. 2 is a schematic flowchart of a method for processing trajectory information according to an embodiment of the present disclosure.

FIG. 3 is a schematic diagram of a first object in a preset pose according to an embodiment of the present disclosure.

FIG. 4 is a schematic diagram of a first object in a preset pose according to another embodiment of the present disclosure.

FIG. 5 is a schematic flowchart of determining corrected trajectory information of a second limb according to an embodiment of the present disclosure.

FIG. 6 is a schematic flowchart of determining qualified offset corresponding to a second limb from candidate offset of each iteration according to an embodiment of the present disclosure t.

FIG. 7 is a schematic flowchart of processing trajectory information according to an embodiment of the present disclosure.

FIG. 8 is a schematic diagram of a joint chain and a single-joint-chain constraint of a human character according to an embodiment of the present disclosure.

FIG. 9 is a schematic diagram of a multi-joint chain constraint according to an embodiment of the present disclosure.

FIG. 10 is a schematic flowchart of forming a target constraint according to an embodiment of the present disclosure.

FIG. 11 is a schematic diagram of an offset according to an embodiment of the present disclosure.

FIG. 12 is a structural block diagram of an apparatus for processing trajectory information according to an embodiment of the present disclosure.

FIG. 13 is a diagram of an internal structure of a computer device according to an embodiment of the present disclosure.

DESCRIPTION OF EMBODIMENTS

The technical solutions in embodiments of the present disclosure are clearly and completely described in the following with reference to the accompanying drawings in the embodiments of the present disclosure. Apparently, the embodiments described are merely some rather than all of the embodiments of the present disclosure. All other embodiments obtained by a person of ordinary skill in the art based on the embodiments of the present disclosure without creative efforts shall fall within the protection scope of the present disclosure.

Embodiments of the present disclosure may be applied to various scenes, including but not limited to cloud technology, artificial intelligence (AI), intelligent transportation, and assisted driving. For example, embodiments of the present disclosure may be applied to the field of an AI technology. AI is a theory, method, technology, and application system that uses a digital computer or a machine controlled by the digital computer to simulate, extend, and expand human intelligence, perceive an environment, acquire knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making. Solutions provided in embodiments of the present disclosure relate to an AI method for processing trajectory information and an information recommendation method, which are specifically described by using the following embodiments.

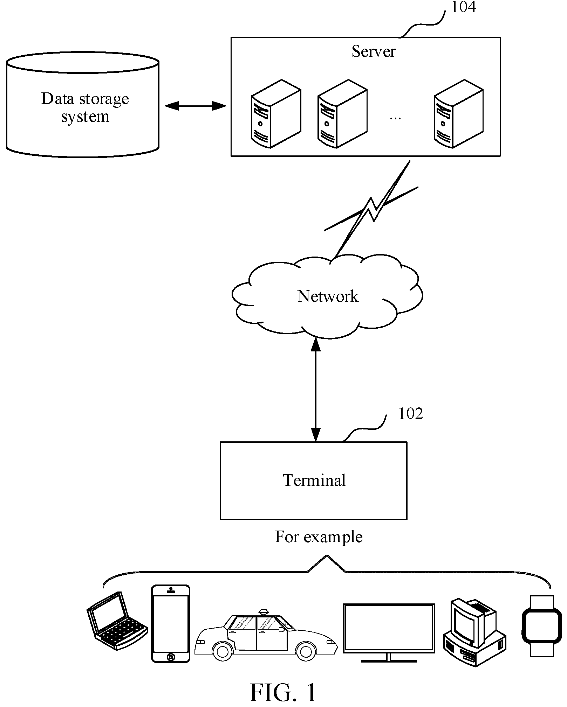

A method for processing trajectory information provided in embodiments of the present disclosure may be applied to an application environment shown in FIG. 1. A terminal 102 communicates with a server 104 via a network. A data storage system may store data that needs to be processed by the server 104. The data storage system may be integrated on the server 104, or may be placed on a cloud or another server. Both the terminal 102 and the server 104 may be separately configured to execute the method for processing trajectory information provided in embodiments of the present disclosure. The terminal 102 and the server 104 may further be cooperatively configured to execute the method for processing trajectory information provided in embodiments of the present disclosure. When the terminal 102 and the server 104 are cooperatively configured to execute the method for processing trajectory information provided in embodiments of the present disclosure, the terminal 102 obtains respective limb trajectory information of at least two first limbs of a first object, where the at least two first limbs of the first object correspond to at least two second limbs, respectively, of a second object. The terminal 102 migrates the limb trajectory information of each first limb to the respective second limb of such first limb to obtain initial trajectory information of each second limb. The terminal 102 transmits the limb trajectory information and the initial trajectory information of each second limb to the server 104. The server 104 determines, according to the limb trajectory information of each first limb, limb pose information of each first limb and limb coordination information among the at least two first limbs. The server 104 pre-corrects the initial trajectory information of each second limb to obtain predicted pose information of each second limb and predicted coordination information among the at least two second limbs. The server 104 determines a single-limb constraint between each first limb and the respective second limb of such first limb according to the limb pose information of such first limb and the predicted pose information of the respective second limb. The server 104 determines a limb-coordination constraint between the first object and the second object according to the limb coordination information and the predicted coordination information. The server 104 corrects the initial trajectory information of all second limbs according to the single-limb constraint of each second limb and the limb-coordination constraint to obtain corrected trajectory information of each second limb. The terminal 102 may be, but is not limited to, various desktop computers, notebook computers, smartphones, tablet computers, Internet of Things devices, and portable wearable devices. The Internet of Thing device may be a smart speaker, a smart television, a smart air conditioner, a smart in-vehicle device, or the like. The portable wearable device may be a smart watch, a smart band, a head-mounted device, or the like. The server 104 may be implemented by using an independent server or a server cluster including multiple servers.

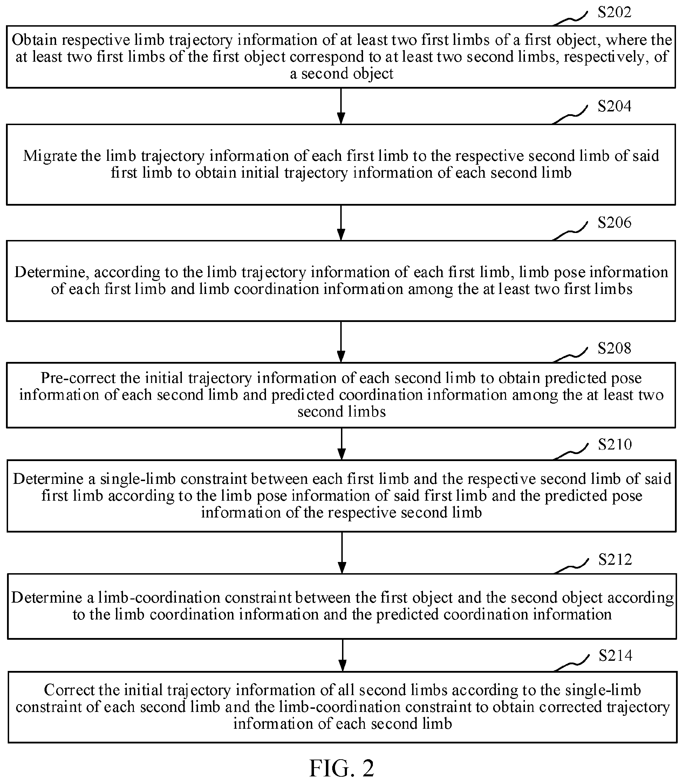

In embodiments of the present disclosure, as shown in FIG. 2, a method for processing trajectory information is provided. An example in which the method is applied to a computer device (the computer device may be the terminal or the server in FIG. 1) in FIG. 1 is used for description. The method includes the following steps.

Step S202: Obtain respective limb trajectory information of at least two first limbs of a first object, where the at least two first limbs of the first object correspond to at least two second limbs, respectively, of a second object.

The first object has a moving limb, and the limb of the first object includes multiple first limbs. Multiple means at least two. The first limb may be, for example, an upper limb, a lower limb, an anterior limb, or a posterior limb. The second object has a moving limb, and the limb of the second object includes multiple second limbs. The second limb may be, for example, an upper limb, a lower limb, an anterior limb, or a posterior limb. The at least two first limbs of the first object correspond spatially or functionally to at least two second limbs, respectively, of the second object. The at least two first limbs of the first object are of the same body region (for example, the same body quadrant) as the at least two second limbs, respectively, of the second object. For example, a left upper limb of the first object corresponds to a left upper limb of the second object, and a right upper limb of the first object corresponds to a right upper limb of the second object.

The first object and the second object may be physical objects or virtual characters and may be specifically physical model objects or virtual characters in a virtual scene, but are not limited thereto. The first object and the second object may be human objects or animal objects.

The first object and the second object belong to the same category of objects. For example, if the first object is a person, the second object is also a person. A quantity of the first limbs of the first object may be the same as a quantity of the second limbs of the second object.

The limb trajectory information refers to trajectory information corresponding to the first limb. In embodiments of the present disclosure including the embodiments of both the claims and the specification (hereinafter referred to as "all embodiments of the present disclosure"), the limb trajectory information may comprise positions of the first limb at different moments. The initial trajectory information refers to coarse trajectory information of the second limb and may comprise (roughly) estimated positions of the second limb at different moments. The position may be two-dimensional coordinates or three-dimensional coordinates.

The computer device may determine the first object and determine the second object to which limb trajectory information is to be migrated. The computer device obtains the respective limb trajectory information of the at least two first limbs of the first object.

Step S204: Migrate the limb trajectory information of each first limb to the respective second limb of such first limb to obtain initial trajectory information of each second limb.

For each first limb, the computer device migrates the limb trajectory information of the first limb to the second limb corresponding to the first limb to obtain the initial trajectory information of the second limb. Thereby, the initial trajectory information of each second limb is obtained.

In all embodiments of the present disclosure, the computer device may determine original limb trajectory information of the second limb and then replace such limb trajectory information of the second limb with the limb trajectory information of the corresponding first limb, and hence the initial trajectory information of the second limb is formed.

The original limb trajectory information of the second limb is the original trajectory information of the second limb and may be comprise positions of the second limb in different moments before the migration.

Step S206: Determine, according to the limb trajectory information of each first limb, limb pose information of each first limb and limb coordination information among the at least two first limbs.

The limb pose information is information representing a pose of the first limb. The limb coordination information is information representing coordination among the first limbs. The coordination among the multiple first limbs is also called first coordination.

The single-limb constraint is a constraint between one first limb of the first object and a corresponding second limb of the second object. The single-limb constraint is a condition for limiting a single first limb in trajectory migration. The single-limb constraint is a limitation imposed on the first limb and needs to be considered when the limb trajectory information of the first limb is migrated to the corresponding second limb.

The computer device obtains the limb trajectory information of each first limb. For each first limb, the computer device determines the limb pose information of the first limb according to the limb trajectory information of the first limb. The computer device determines the limb coordination information among the at least two first limbs according to the limb trajectory information of each first limb.

Step S208: Pre-correct the initial trajectory information of each second limb to obtain predicted pose information of each second limb and predicted coordination information among the at least two second limbs.

The predicted pose information is information representing a pose of the second limb after the initial trajectory information of the second limb is pre-corrected. The predicted coordination information is information representing an coordination among the second limbs after the initial trajectory information of the second limbs is pre-corrected. The coordination among the second limbs is also called a second coordination. The pre-correction is for pre-estimating the initial trajectory information of the second limb.

For each second limb, the computer device pre-corrects the initial trajectory information of the second limb to obtain the predicted trajectory information of the second limb, thereby the predicted trajectory information of each second limb can be obtained. The predicted trajectory information is trajectory information of the second limb after the pre-correction. The predicted trajectory information may comprise predicated positions of the second limb at different moments.

The computer device determines the predicted pose information of the second limb, according to the predicted trajectory information of the second limb, and hence the predicted pose information of each second limb is obtained. The computer device determines the predicted coordination information among the at least two second limbs according to the predicted trajectory information of all second limbs.

Step S210: Determine a single-limb constraint between each first limb and the respective second limb of such first limb according to the limb pose information of such first limb and the predicted pose information of the respective second limb.

For each first limb of the first object, the second limb of the second object corresponding to the first limb is determined. The computer device determines a difference between the limb pose information of the first limb and the predicted pose information of the corresponding second limb and then uses the difference as the single-limb constraint between the first limb and the corresponding second limb.

Step S212: Determine, a limb-coordination constraint between the first object and the second object according to the limb coordination information and the predicted coordination information.

The limb-coordination constraint is multi-joint chain constraint. The limb-coordination constraint is imposed on coordination among multiple limbs that interact with each other during trajectory migration.

The limb-coordination constraint is imposed on coordination among multiple first limbs and on coordination among multiple second limbs when the limb trajectory information of the multiple first limbs is migrated to the multiple second limbs.

The computer device determines the limb coordination information among at least two first limbs of the first object. The computer device determines the limb-coordination constraint between the first object and the second object according to the limb coordination information and the predicted coordination information.

The coordination among the multiple first limbs is also called the first coordination. The coordination among the multiple second limbs is also called the second coordination. The limb-coordination constraint between the first object and the second object is a constraint between the first coordination and the second coordination.

Step S214: Correct the initial trajectory information of all second limbs according to the single-limb constraint of each second limb and the limb-coordination constraint to obtain corrected trajectory information of each second limb.

The corrected trajectory information is a resultant trajectory information of the second limb and may comprise resultant positions of the second limb at different moments. The position may be two-dimensional coordinates or three-dimensional coordinates.

For each second limb, the computer device corrects the initial trajectory information of the second limb according to the single-limb constraints and the limb-coordination constraint of the second limbs to obtain the corrected trajectory information of the second limbs.

In all embodiments of the present disclosure, the step of pre-correcting the initial trajectory information of each second limb to obtain the predicted pose information of each second limb and the predicted coordination information among the at least two second limbs may comprise following sub-steps for each iteration.

A candidate offset is obtained. The initial trajectory information of each second limb is pre-corrected according to the candidate offset to obtain the predicted pose information of each second limb and the predicted coordination information among the at least two second limbs.

The step of determining the single-limb constraint between each first limb and the respective second limb of such first limb according to the limb pose information of such first limb and the predicted pose information of the respective second limb comprises a following sub-step for each iteration. A single-limb constraint between each first limb and the corresponding second limbi is determined according to the limb pose information of the first limb and the predicted pose information of the corresponding second limb in such iteration.

The step of determining the limb-coordination constraint between the first object and the second object according to the limb coordination information and the predicted coordination information comprises a following sub-step for each iteration. The limb-coordination constraint between the first object and the second object is generated according to the limb coordination information and the predicted coordination information in such iteration.

The step of correcting the initial trajectory information of all second limbs according to the single-limb constraint of each second limb and the limb-coordination constraint to obtain the corrected trajectory information of each second limb comprises a following sub-step. The initial trajectory information of all second limbs is corrected according to the respective single-limb constraints of each iteration and the respective limb-coordination constraint of each iteration to obtain the corrected trajectory information of each second limb.

The candidate offset is a preset offset for each iteration, and the candidate offset used in a next iteration may be obtained through adding a preset step size to the candidate offset used in a current iteration. For example, the candidate offset in the first iteration is (0, 0), and the preset step size is 0.5. After the first iteration is completed, the candidate offset (0, 0) is increased by the preset step size, and hence the candidate offset for the second iteration is (0.5, 0.5). Then, the second iteration starts. After the second iteration , the candidate offset (0.5, 0.5) is further adjusted and becomes a candidate offset (1, 1) for the third iteration. Then, the third iteration starts.

The computer device may obtain the candidate offset of each iteration. In one iteration, the initial trajectory information of each second limb is pre-corrected according to the candidate offset of such iteration to obtain the predicted pose information of each second limb and the coordination information among at least two second limbs of the second object. The above processing is applied to each iteration, such that the predicted pose information of each second limb and the predicted coordination information among the at least two second limbs of the second object can be obtained for each iteration.

For each iteration, the computer device determines a difference between the limb pose information of each first limb and the predicted pose information of the corresponding second limb and uses the difference as the single-limb constraint between such first limb and the corresponding second limb. Through the above processing, the single-limb constraints are determined for each iteration.

For each iteration, the limb-coordination constraint between the first object and the second object in the iteration is generated according to the limb coordination information and the predicted coordination information in such iteration. Through the above processing, the limb-coordination constraint can be determined for each iteration.

For each second limb, the computer device may select, from the candidate offsets of all iterations, qualified offset(s) according to the single-limb constraints of each iteration and the limb-coordination constraint of each iteration. The computer device corrects, according to the qualified offset(s), the initial trajectory information of such second limb to obtain the corrected trajectory information of such second limb.

Thereby, the candidate offset of each iteration is obtained. For each iteration, the initial trajectory information of each second limb is pre-corrected based on the candidate offset of the iteration to obtain the predicted pose information of each second limb and the predicted coordination information among the at least two second limbs. The initial trajectory information may be pre-corrected using the candidate offset, such that the pose of each second limb in the second object and the coordination among the second limbs are predicted through the pre-correction. In addition, the pre-correction is performed in each iteration, and the pose of each second limb of the second object and the coordination among the second limbs may be predicted repeatedly through multiple iterations. In each iteration, the single-limb constraint between the first limb and the second limb is determined according to the limb pose information before the migration and the predicted pose information after the pre-correction. Hence, the generated single-limb constraint enables each second limb to have a pose consistent with that of the corresponding first limb, because a pose characteristic of the individual limb is considered during migration of the limb information. The limb-coordination constraint between the first object and the second object in each iteration is generated according to the limb coordination information and the predicted coordination information of such iteration. The limb-coordination constraint enables coordination between the second limbs to follow the coordination among the first limbs. Thereby, the migration of trajectory information is more accurate.

In all embodiments of the present disclosure, for each iteration, the step of pre-correcting the initial trajectory information of each second limb according to the candidate offset to obtain the predicted pose information of each second limb and the predicted coordination information among the at least two second limbs may comprise following sub-steps.

The initial trajectory information of each second limb according to the candidate offset to obtain predicted trajectory information of each second limb. The predicted pose information of each second limb is determined according to the predicted trajectory information of such second limb. The predicted coordination information among the at least two second limbs is determined according to the predicted trajectory information of all second limbs.

In one iteration, the respective candidate offset is configured to pre-correct the initial trajectory information of each second limb to obtain the predicted trajectory information of each second limb for such iteration. For each second limb, the predicted pose information of the second limb is determined according to the predicted trajectory information of such second limb. The predicted coordination information among the at least two second limbs is determined according to the predicted trajectory information of all second limbs.

Thereby, for each iteration, an initial start position and an initial end position of each second limb are corrected using the candidate offset of such iteration, and hence a predicted start position and a predicted end position for such second limb in such iteration are obtained. That is, corresponding position information can be obtained based on correction of the particular candidate offset. According to the predicted start position and the predicted end position for each second limb in the iteration, the pose information of each second limb and the coordination information among the second limbs can be accurately predicted.

In all embodiments of the present disclosure, the step of correcting the initial trajectory information of all second limbs, according to the single-limb constraints for each iteration and the limb-coordination constraint for each iteration, to obtain the corrected trajectory information of each second limb may comprise following sub-steps for each second limb.

Qualified offset(s) are selected from the candidate offsets of all iterations according to the single-limb constraints of each iteration and the limb-coordination constraint of each iteration. The initial trajectory information of such second limb is corrected according to the qualified offset(s) to obtain the corrected trajectory information of such second limb.

The computer device may determine a total constraint of all second limbs in each iteration according to the limb-coordination constraints and the single-limb constraint of each second limb for such iteration. For each second limb, total constraint(s) satisfying a correction condition is determined from the total constraints of all iterations, the iteration(s) having the total constraint(s) are determined as the qualified iterations, and the offset(s) of the iteration(s) are determined to serve as the qualified offset(s) of such second limb.

Hence, for each iteration, the initial start position and the initial end position of each second limb are corrected using the candidate offset of such iteration, and hence a predicted start position and a predicted end position for such second limb in such iteration are obtained. That is, corresponding position information can be obtained based on correction of the particular candidate offset. According to the predicted start position and the predicted end position for each second limb in the iteration, the pose information of each second limb and the coordination information among the second limbs can be accurately predicted.

In all embodiments of the present disclosure, the first limb may comprise a start joint and an end j oint, and the second limb may comprise a start joint and an end j oint. The start joint of the first limb is called a first start joint, and the end joint of the first limb is called a first end joint. The start j oint of the second limb is called a second start j oint, and the end j oint of the second limb is called a second end joint. The limb trajectory information may comprise three-dimensional coordinates of the first start joint and three-dimensional coordinates of the first end joint. The initial trajectory information may comprise initial three-dimensional coordinates of the second start joint and initial three-dimensional coordinates of the second end joint. The single-limb constraint comprises a single-joint-chain constraining parameter. The limb-coordination constraint comprises a joint-chain coordination constraining parameter. The candidate offset is a deviation parameter. The qualified offset is a qualified deviation parameter and may be deviation of three-dimensional coordinates.

After calculating the single-joint-chain constraining parameter and the joint-chain coordination constraining parameter in each iteration, the computer device selects the qualified offset of each second limb, from the candidate offsets of all iterations, according to the single-joint-chain constraining parameter and the joint-chain coordination constraining parameter of the second limbs for each iteration. The initial three-dimensional coordinates of the second end joint of the second limb are corrected by the qualified offset of the second limb to obtain pre-corrected three-dimensional coordinates of the second end joint. Alternatively or additionally, the initial three-dimensional coordinates of the second start joint are corrected by the qualified offset of the second limbs to obtain pre-corrected three-dimensional coordinates of the second start joint.

In all embodiments of the present disclosure, the qualified offset may be two-dimensional coordinates. For example, a coordinate on an x-axis and a coordinate on a y-axis are obtained, and a coordinate on a z-axis may be set to 0.

Herein the respective limb trajectory information of the at least two first limbs of the first object are obtained, and the at least two first limbs of the first object correspond to the at least two second limbs, respectively, of the second object. Thereby, the respective second limb to which the limb trajectory information of each first limb needs to be migrated can be determined. The limb trajectory information of each first limb of each first object is migrated to the corresponding second limb of the second object, and hence the initial trajectory information of each second limb can be obtained. The limb pose information of each first limb and the limb coordination information among the at least two first limbs are determined according to the limb trajectory information of each first limb, and hence the pose of each first limb and the coordination among the first limbs can be determined. The respective initial trajectory information of each second limbs is pre-corrected to obtain a predestination on respective poses of the second limbs and the coordination among the second limbs. The single-limb constraint between each first limb and the corresponding second limb is determined according to the limb pose information of the first limb and the predicted pose information of the second limb, and the generated single-limb constraint enables the pose of the second limb to follow that of the first limb. The limb-coordination constraint between the first object and the second object is determined according to the limb coordination information and the predicted coordination information, and the limb-coordination constraint enables coordination of the second limbs to follow that of the first limbs. The initial trajectory information of each second limb is corrected according to the individual single-limb constraints and the limb-coordination constraint to obtain the corrected trajectory information of all second limbs. Thereby, the second limbs of the second object cannot only have poses consistent with those of the first limbs of the first object but also retain their coordination consistent with coordination among the first limbs. Hence, the trajectory information is accurately migrated.

In embodiments of the present disclosure, the limb trajectory information of each first limb of the first object is obtained, and the limb trajectory information is migrated from each first limb of the first object to the corresponding second limb of the second object, such that the initial trajectory information of each second limb is obtained. The candidate offset is obtained, and the predicted pose information of each second limb and the predicted coordination information among the second limbs are determined according to the initial trajectory information of each second limb and the candidate offset. The single-limb constraint between each first limb and the corresponding second limb is generated according to the limb pose information of such first limb and the predicted pose information of the corresponding second limb. The limb-coordination constraint between the first object and the second object is generated according to the limb coordination information and the predicted coordination information. The candidate offset is adjusted by the preset step size to obtain an updated candidate offset. Then, a next iteration starts, and the updated candidate offset serves as the candidate offset in the next iteration. The step of determining the predicted pose information of each second limb and the predicted coordination information among the second limbs according to the initial trajectory information of each second limb and the candidate offset is performed again. The iterations continue until an iteration stop condition is satisfied, and for each iteration the single-limb constraint of each second limb and limb-coordination constraint are obtained. The qualified offset of each second limb is selected from the candidate offset(s) of all iterations according to the single-limb constraints and the limb-coordination constraint of the second limbs in each iteration. The initial trajectory information of each second limb is corrected based on the qualified offset of the second limb to obtain the corrected trajectory information of the second limbs.

In all embodiments of the present disclosure, the step of migrating the limb trajectory information of each first limb to the respective second limb of such first limb to obtain the initial trajectory information of each second limb may comprise following sub-steps.

A first length of each first limb and a second length of each second limb are determined. The limb trajectory information of each first limb is adjusted according to the first length of such first limb and the second length of the respective second limb to obtain the initial trajectory information of the respective second limb.

The first length is a length from the first start joint to the first end joint of the first limb. As an example, the first limb is a lower limb, the first start joint is a hip joint, the first end joint is an ankle joint, and the first length of the lower limb is a length from the hip joint to the ankle joint. As another example, the first limb is an upper limb, the first start joint is a shoulder joint, the first end joint is a wrist joint, and the first length of the upper limb is a length from the shoulder joint to the wrist joint. The second length is a length from the second start joint to the second end joint of the second limb.

The computer device determines the first length of each first limb and determines the second length of each second limb. The computer device adjusts the limb trajectory information of each first limb according to the first length of such first limb and the second length of the corresponding second limb to obtain adjusted trajectory information. The computer device then replaces original limb trajectory information of the corresponding second limb with the adjusted trajectory information. That is, the computer device obtains the initial trajectory information of the corresponding second limb.

The limb trajectory information may comprise three-dimensional coordinates of the first start joint and three-dimensional coordinates of the first end j oint. The initial trajectory information may comprise initial three-dimensional coordinates of the second start joint and initial three-dimensional coordinates of the second end joint. In all embodiments of the present disclosure, the computer device may determine the first length of the first limb, determine the second limb corresponding to the first limb, and determine the second length of the second limb. The computer device then determines a ratio of the second length to the first length and multiplies the ratio with the limb trajectory information of the first limb to obtain the initial trajectory information corresponding to the corresponding second limb. For example, the ratio is multiplied by the three-dimensional coordinates of the first start joint to obtain the initial three-dimensional coordinates of the second start joint, and the ratio is multiplied by the three-dimensional coordinates of the first end joint to obtain the initial three-dimensional coordinates of the second end joint.

For example, trajectory migration is performed according to a following equation:

$$\widetilde{X_k} = \frac{\tilde{L}}{L} X_k.$$

$\widetilde{X_k}$ is the initial trajectory information of the second limb, $X_k$ is the limb trajectory information of the first limb, $\tilde{L}$ is the second length, and L is the first length.

In this embodiment, the first length of each first limb and the second length of each second limb are determined. For each first limb, the limb trajectory information of the first limb is adjusted according to the first length of the first limb and the second length of the corresponding second limb to migrate its limb trajectory information to the corresponding second limb. Migration is performed with reference to limb lengths, so that the migrated trajectory information conforms to limbs of a second object to scale, and hence the initial trajectory information of each second limb are coarsely generated.

In all embodiments of the present disclosure, the initial trajectory information may comprise an initial start position and an initial end position of such second limb, and the predicted trajectory information of each second limb may comprise a predicted start position and a predicted end position of such second limb.

The step of determining the predicted pose information of each second limb according to the predicted trajectory information of such second limb may comprise following sub-steps for each second limb. A second length of such second limb is determined. The predicted pose information of such second limb is determined according to the predicted start position, the predicted end position, and the second length of such second limb.

The step of determining the predicted coordination information among the at least two second limbs according to the predicted trajectory information of all second limbs comprises a following sub-step. The predicted coordination information among the at least two second limbs is determined according to the predicted start position of all second limbs and the predicted end position of all second limb.

The second limb may comprise a start joint and an end j oint. The start joint of the second limb is called a second start joint, and the end joint of the second limb is called a second end joint. The initial trajectory information of the second limb comprises the initial start position and the initial end position of the second limb. In such case, the initial start position of the second limb is an initial position of the second start joint, and the initial end position of the second limb is an initial position of the second end joint.

The predicted trajectory information of the second limb comprises the predicted start position and the predicted end position of the second limb. In such case, the predicted start position of the second limb is a predicted position of the second start joint, and the predicted end position of the second limb is a predicted position of the second end joint. In other words, the initial start position is a position of the second start joint before the pre-correction, and the predicted start position is a position of the second start joint after the pre-correction. The initial end position is a position of the second end joint before the pre-correction, and the predicted end position is a position of the second end joint after the pre-correction.

In a current iteration, the computer device determines the candidate offset of the current iteration. For each second limb, the computer device pre-corrects the initial start position of the second start joint using the candidate offset of the current iteration to obtain the predicted start position of the second start joint for the current iteration, and the computer device corrects the initial end position of the second end joint using the candidate offset of the current iteration to obtain the predicted end position of the second end joint for the current iteration.

In the current iteration and for each second limb, the predicted pose information of the second limb in the current iteration is determined according to the predicted start position, the predicted end position, and the second length of the second limb. On a basis of such processing, the respective predicted pose information of each second limb is obtained for the current iteration.

In the current iteration, the computer device may determine the predicted coordination information among the multiple second limbs according to the predicted start position and the predicted end position of each second limb for the current iteration.

Similar processing is applied to other iteration, such that the predicted pose information of each second limb and the predicted coordination information among the multiple second limbs can be obtained for each iteration.

Hence, the second length of each second limb is determined. A pose of each second limb after the pre-correction in each iteration is accurately predicted according to the predicted start position, the predicted end position, and the second length of the second limb, and the coordination the among multiple second limbs after the pre-correction is also accurately predicted.

In all embodiments of the present disclosure, the step of determining the predicted pose information of each second limb and the predicted coordination information among the at least two second limbs according to the predicted start position and the predicted end position of each second limb may comprise following sub-steps.

Respective second lengths of the second limbs of the second object are determined. For each iteration, the predicted pose information of each second limb is determined according to the predicted start position, the predicted end position, and the second length of such second limb. For each iteration, the predicted coordination information among the second limbs is determined according to the respective predicted start positions and the respective predicted end positions of the second limbs.

The computer device determines the second length of each second limb. In all embodiments of the present disclosure, for each iteration, the computer device may determine a distance between the predicted end position and the predicted start position of such second limb and calculates a ratio of the distance to the second length of such second limb as the predicted pose information of such second limb. On a basis of similar processing, the respective predicted pose information of each second limb in each iteration can be obtained.

In all embodiments of the present disclosure, for each iteration, the computer device may determine distance(s) among the respective predicted start positions of the second limbs and distance(s) among the respective predicted end positions of the second limbs, and the computer device then calculates the predicted coordination information among the second limbs for such iteration according to these distances.

As an example, the predicted start position and the predicted end position of second limb j are $Ps_j^k$ and $Pe_j^k$, respectively, and a second length of second limb j

is $L_j$. The predicted pose information $v_j^k$ may be determined according to a following equation, in which the predicted pose information $v_j^k$ may be expressed as a normalized vector:

$$v_j^k = \frac{Pe_j^k - Ps_j^k}{L_j}.$$

It is assumed that two second limbs of the second object are denoted by "0" and "1", the predicted end positions of second limb 0 and second limb 1 are $Pe_0^k$ and $Pe_1^k$, respectively, and predicted start positions of second limb 0 and second limb 1 are $Ps_0^k$ and $Ps_1^k$, respectively. A normalized vector $v_{01}^k$ of second limb 0 and second limb 1 is defined as:

$$v_{01}^k = \frac{Pe_0^k - Pe_1^k}{||Ps_0^k - Ps_1^k||}.$$

The normalized vector $v_{01}^k$ may serve as the predicted coordination information between second limb 0 and second limb 1.

Hence, the respective second lengths of the second limbs of the second object are determined, and the predicted pose information corresponding to each second limb in the iteration may be accurately determined according to the predicted start position, the predicted end position, and the second length of each second limb in each iteration, such that a constraint between individual limbs of different objects can be accurately constructed based on the predicted pose information of the individual second limbs. The predicted coordination information among the second limbs may be accurately determined according to the respective predicted start positions and the predicted end positions of the second limbs in each iteration, such that a constraint due to coordination among the second limbs can be accurately constructed. Thereby, the corrected trajectory information after trajectory migration is more accurate due to both a constraint on individual target limbs and a constraint on an integral of multiple target limbs. Other pose information and other coordination information can be calculated similarly to the above manner.

In all embodiments of the present disclosure, the limb trajectory information of each first limb may comprise a limb start position and a limb end position of such first limb. The step of determining the limb pose information of each first limb and the limb coordination information among the at least two first limbs according to the limb trajectory information of each first limb may comprise following sub-steps.

For each first limb, a first length of each first limb is determined, and the limb pose information of such first limb is determined according to the limb start position, the limb end position, and the first length of such first limb.

The limb coordination information among the at least two first limbs is determined according to the limb start position and the limb end position of each first limb.

The computer device determines the limb start position of each first limb and the limb end position of each first limb. The computer device determines a first length of each first limb and determines the distance between the limb end position and the limb start position of each first limb. For each first limb, the computer device may calculate a ratio of the distance to the first length of such first limb as the limb pose information of such first limb.

The computer device may determine distance(s) among the respective limb start positions of the first limbs and distance(s) among the respective limb end positions of the first limbs, and the computer device determines the limb coordination information among the first limbs according to these distances.

In this embodiment, the first length of each first limb is determined. For each first limb, the limb pose information of the first limb can be accurately determined according to the limb start position, the limb end position, and the first length of the first limb. The coordination information among the first limbs can be accurately determined according to the limb start position and the limb end position of each first limb.

In all embodiments of the present disclosure, the step of correcting the initial trajectory information of all second limbs according to the single-limb constraint of each second limb and the limb-coordination constraint to obtain the corrected trajectory information of each second limb may comprise following sub-steps.

A weight parameter of the single-limb constraints of all second limbs and a weight parameter of the limb-coordination constraint are determined. A total constraint of all second limbs is determined according to the limb-coordination constraint, the single-limb constraints, and the weight parameters. The initial trajectory information of all second limbs is corrected according to the total constraint to obtain the corrected trajectory information of each second limb.

Hence, the weight parameter of the single-limb constraints and the weight parameter of the limb-coordination constraint are determined. The total constraint of the second limbs in each iteration is determined according to the limb-coordination constraint in such iteration, the single-limb constraints of the second limbs in such iteration, and the weight parameters. The initial trajectory information of each second limb is corrected according to the total constraint of the second limbs in each iteration to obtain the corrected trajectory information of the second limbs.

Throughout the iterations, the single-limb constraints may use the same weight parameter, and the limb-coordination constraint uses the same weight parameter.

The computer device determines the weight parameter of the single-limb constraints and the weight parameter of the limb-coordination constraint. For each iteration, a weighted sum is calculated according to the weight parameter of the single-limb constraints, the weight parameter of the limb-coordination constraint, the limb-coordination constraint in such iteration, and the single-limb constraints of the second limbs in such iteration, such that the total constraint of the second limbs is obtained. On a basis of similar processing, the total constraints of the second limbs in each iteration can be obtained.

For each second limb, the qualified offset(s) of the second limbs is selected from the candidate offsets of all iterations according to the total constraint of the second limbs of each iteration. The initial trajectory information of the second limbs is corrected according to the qualified offset(s) of the second limbs to obtain the corrected trajectory information of the second limbs. On a basis of similar processing, the corrected trajectory information of each second limb can be obtained.

Hence, the weight parameter of the single-limb constraints and the weight parameter of the limb-coordination constraint are determined, that is, proportions of the single-limb constraint and the multi-joint chain constraint are determined for the trajectory migration. Throughout the iterations, the total constraint for all second limbs in each iteration is accurately determined according to the limb-coordination constraint, the single-limb constraints of all second limbs, and the weight parameters. Hence, the finally selected offset is based on a combination of the single-limb constraints and the multi-joint chain constraint. The corrected trajectory information of all second limbs can be accurately determined.

In all embodiments of the present disclosure, the limb trajectory information of each first limb may comprise a limb start position and a limb end position of such first limb. The step of determining the weight parameter of the single-limb constraints of all second limbs and the weight parameter of the limb-coordination constraint comprises following sub-steps.

The weight parameter of the single-limb constraints of all second limbs is determined according to the limb start positions and the limb end positions of all first limbs. The weight parameter of the limb-coordination constraint is determined according to the weight parameter of the single-limb constraint.

The limb trajectory information comprises the limb start position and the limb end position of the first limb.

The computer device determines the limb start position of each first limb and determines the limb end position of each first limb. The computer device may determine distances between the respective limb end positions of the first limbs, determine distances between the respective limb start positions of the first limbs, and determine the weight parameter of the single-limb constraints according to these distances.

The computer device then determines the weight parameter of the limb-coordination constraint according to the weight parameter of the single-limb constraint. As an example, a difference between a preset value and the weight parameter of the single-limb constraints serves as the weight parameter of the limb-coordination constraint. The preset value may be an empirical value set in advance.

In all embodiments of the present disclosure, the step of determining the weight parameter of the single-limb constraints according to the limb start position and the limb end position of each first limb may comprise following sub-steps.

Euclidean distance(s) among the limb start positions are determined according to the limb start position of each first limb. The weight parameter of the single-limb constraints is determined according to the Euclidean distance(s) and distance(s) among the limb end positions.

In all embodiments of the present disclosure, a candidate weight parameter may be determined according to the respective limb start positions and the respective limb end positions of the first limbs. The weight parameter of single-limb constraints is determined using the candidate weight parameter and a preset value. The weight parameter of limb-coordination constraint is determined according to another preset value and the weight parameter of the single-limb constraints. When the candidate weight parameter is less than the preset value, the candidate weight parameter serves directly as the weight parameter. When the candidate weight parameter is greater than the preset value, the preset value serves as the weight parameter.

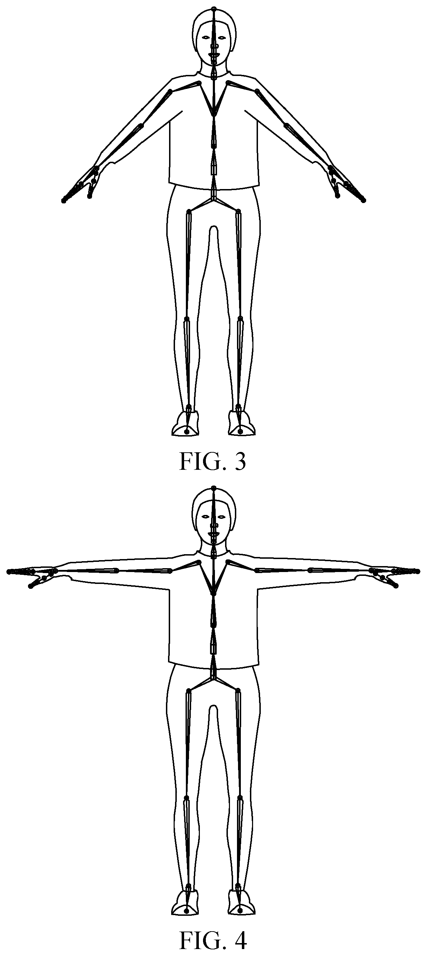

Herein the respective limb start positions of the first limbs of the first object in a preset pose may be determined, and the Euclidean distance(s) between the limb start positions is determined. The preset pose may be an A-shaped pose (or called A-Pose) as shown in FIG. 3 or may be a T-shaped pose (or called T-Pose) as shown in FIG. 4.

As an example, the two first limbs of the first object are denoted by i and j, respectively, the limb end positions of first limb i and first limb j are $Pe_i^k$ and $Pe_j^k$, respectively, and the Euclidean distance between respective limb start positions of first limb i and first limb j is $Ls_{ij}$. The total constraint $C_{hc}^k$ corresponding to the first limb is calculated as follows:

$$C_{hc}^k = w_k C_{sc}^k + (1 - w_k) C_{mc}^k.$$

$$w_k = \min(1, \frac{\|Pe_i^k - Pe_j^k\|}{2 \cdot Ls_{ij}})$$

. $w_k$ represents the weight parameter of single-limb constraints $C_{sc}^k$, and $(1 - w_k)$ represents the weight parameter of the limb-coordination constraint $C_{mc}^k$.

Hence, the weight parameter of the single-limb constraints is determined according to the respective limb start positions and the respective limb end positions of the first limbs, such that the proportion of the single-limb constraint in trajectory migration can be determined based on the limb start positions and the limb end positions of the first limbs. The weight parameter of limb-coordination constraint is determined according to the weight parameter of the single-limb constraint, such that a proportion of multi-joint chain constraint in the trajectory migration can be determined. The corrected trajectory information of a second limb can thus be more accurately calculated according to the single-limb constraints and the limb-coordination constraint.

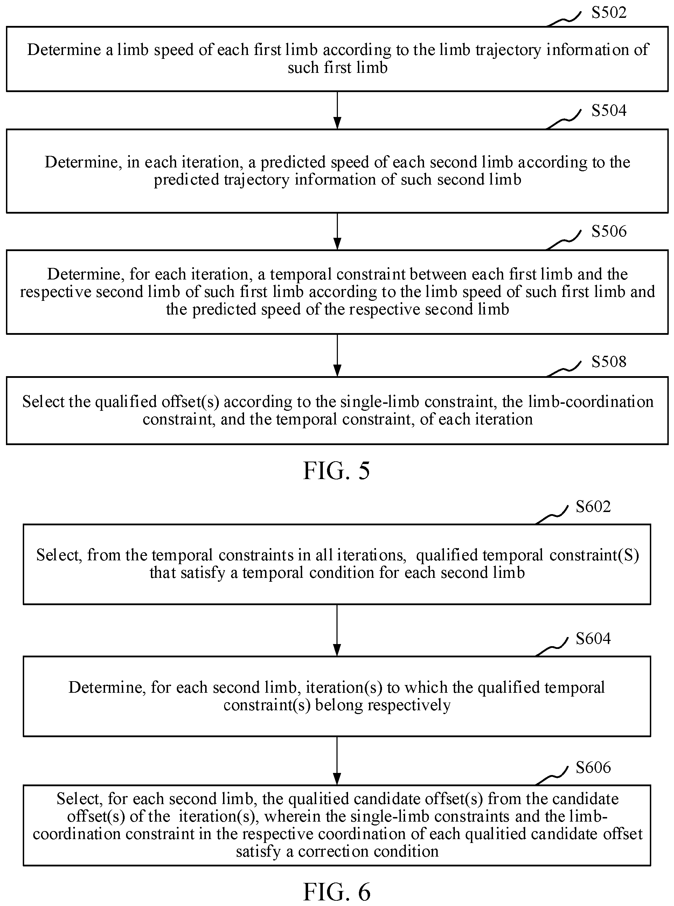

In all embodiments of the present disclosure the method may further comprise following operations, as shown in FIG. 5.

Step S502: Determine a limb speed of each first limb according to the limb trajectory information of such first limb.

The limb trajectory information may comprise limb end positions of each first limb of at least two moments, respectively. The step of determining the limb speed of each first limb according to the limb trajectory information of such first limb comprises a following sub-step.

A first temporal relationship of such first limb between the at least two moments is determined. The limb speed of such first limb is determined according to the limb end positions of the two moments and the first temporal relationship.

The at least two moments may be two consecutive moments. The first temporal relationship is a time difference between the two consecutive moments.

Each first limb may comprise a first end joint, and the limb trajectory information comprises respective positions of the first end joint of the at least two moments. A first temporal relationship of the first end joint of the at least two moments is determined for the first end joint of each first limb. The limb speed of each first limb is determined according to the positions of the end joint of such first limb of the at least two moments and the first temporal relationship.

Hence, the first temporal relationship of each first limb of the at least two moments is determined, and the temporal relationship of each first limb in different moments can be determined. The limb speed of the first limb can be accurately determined through dividing a difference between the limb end positions of the first limb of the at least two moments by the first temporal relationship.

Step S504: Determine, in each iteration, a predicted speed of each second limb according to the predicted trajectory information of such second limb.

The predicted speed is a prediction on a speed of the second limb.

The initial trajectory information may comprise respective initial end positions of the second limb of the at least two moments, and the predicted trajectory information comprises the respective predicted end positions of the second limb in at least two moments.

The step of determining, in each iteration, the predicted speed of each second limb according to the predicted trajectory information of such second limb may comprise following sub-steps.

A second temporal relationship of such second limb between the at least two moments is determined. The predicted speed of the second limb is determined according to the predicted end positions of the second limb of the at least two moments and the second temporal relationship.

The initial trajectory information may comprise respective initial positions of the second end joint of each second limb of the at least two moments, and the predicted trajectory information may comprise respective predicted positions of the second end joint of each second limb of the at least two moments. For each iteration, a second temporal relationship of the second end joint of each second limb is determined for the at least two moments. A predicted speed of each second limb is determined according to the predicted positions of the second end joint of such second limb of the at least two moments and the second temporal relationship.

The at least two moments may be two consecutive moments. The second temporal relationship may be a time difference between the two consecutive moments.

As an example, the respective predicted end positions of the second limb in the two consecutive moments are determined, the distance between the two predicted end positions is determined, and the predicted speed of the second limb is determined according to the time difference between the two consecutive moments and the distance.

Hence, for each iteration, the second temporal relationship of each second limb is determined for the at least two moments, and the temporal relationship of each second limb can be determined for different moments. The predicted speed of the second limb can be accurately determined through dividing the distance between the predicted end positions of the second limb of the at least two moments by the second temporal relationship.

Step S506: Determine, for each iteration, a temporal constraint between each first limb and the respective second limb of such first limb according to the limb speed of such first limb and the predicted speed of the respective second limb.

The temporal constraint is a timing constraint when the limb trajectory information of the first limb is migrated to the second limb of the second object. As an example, the temporal constraint may be a timing constraint when the respective limb end positions of the first limb at each moment moments are migrated to the corresponding second limb.

For each iteration, the computer device may generate the temporal constraint between each first limb and the corresponding second limb according to the respective limb speed of such first limb and the corresponding predicted speed of such iteration.

The step of selecting, from the candidate offsets of all iterations, qualified offset(s) according to the single-limb constraints of each iteration and the limb-coordination constraint of each iteration may comprise a sub-step S508.

Step S508: Select the one or more qualified offset according to the single-limb constraint, the limb-coordination constraint, and the temporal constraint, of each iteration.

The computer device determines, from candidate offsets of all iterations, the qualified offset of the second limbs according to the single-limb constraints, the limb-coordination constraint, and the temporal constraint, of the second limbs in each iteration. The initial trajectory information of the second limbs is corrected according to the qualified offset of the second limbs to obtain the corrected trajectory information of the second limbs.

In all embodiments of the present disclosure, the step of determining the qualified offset(s) of the second limbs from the candidate offsets of all iterations according to the single-limb constraints, the limb-coordination constraint, and the temporal constraints, of the second limbs in each iteration may comprise following sub-steps.

For each iteration, the total constraint of each second limb is determined according to the limb-coordination constraint in such iteration and the single-limb constraints of the second limbs in such iteration. The qualified offset(s) of the second limbs is determined from the candidate offsets of all iterations according to the total constraint of each iteration and the temporal constraint of the second limbs of each iteration.

In all embodiments of the present disclosure, the step of determining, for each iteration, the total constraint of each second limb is determined according to the limb-coordination constraint in such iteration and the single-limb constraints of the second limbs in such iteration may comprise following sub-steps.

The weight parameter of the single-limb constraints and the weight parameter of the limb-coordination constraint. The total constraint of the second limbs in each iteration is determined according to the limb-coordination constraint in the iteration, the single-limb constraint of each second limb, and the weight parameters.

In all embodiments of the present disclosure, the step of determining, for each second limb, the corrected trajectory information of the second limbs according to the total constraint and the temporal constraint of the second limbs in each iteration may comprise following sub-steps.

Qualified offset(s) of the second limbs are determined from the candidate offset of all iterations according to the total constraint and the temporal constraint of the second limbs in each iteration. The initial trajectory information of the second limbs is corrected according to the qualified offset(s) of the second limbs to obtain the corrected trajectory information of the second limbs.

In all embodiments of the present disclosure, the step of determining, for each second limb, the qualified offset(s) of the second limbs from the candidate offset of all iterations according to the total constraint and the temporal constraint of the second limbs in each iteration may comprise following sub-steps for each second limb.

The qualified temporal constraint(s) that satisfy a temporal condition are selected from the temporal constraints of all iterations. Iteration(s) to which the qualified temporal constraint(s) belong, respectively, are determined. The qualitied candidate offset(s) are selected from the candidate offset(s) of the iteration(s), where the single-limb constraints and the limb-coordination constraint in the respective iteration of each qualitied candidate offset satisfy a correction condition.

Hence, the limb speed of each first limb is determined according to the limb trajectory information of each first limb. For each iteration, the predicted speed of each second limb is determined based on the initial trajectory information of each second limb and the candidate offset of such iteration, and the temporal constraint between the first object and the second object is generated for such iteration based on the limb speed of the first limbs and the predicted speed. Hence, migration of limb trajectory through different moments is limited using the temporal constraint. For each second limb, the qualified offset is selected from the candidate offsets of the iterations according to constraints, e.g., the single-limb constraint, the limb-coordination constraint, and the temporal constraint of each second limb in each iteration. Hence, the determined qualified offset conforms better to characteristics of the second limb, improving trajectory migration accuracy.

In all embodiments of the present disclosure, a first limb of the at least two first limbs may be connected to a first foot of the first object, and the respective second limb of the first limb is connected to a second foot of the second object. The step of determining, for each iteration, the temporal constraint between the first limb and the respective second limb according to the limb speed of the first limb and the predicted speed of the respective second limb may comprise following sub-steps.

A first foot length of the first foot and a second foot length of the second foot are determined. The temporal constraint between the first limb and the respective second limb for such iteration is determined according to the limb speed, the first foot length, the second foot length, and the predicted speed of such iteration.

It is assumed that the first limb is a lower limb of the first object, and the second limb is a lower limb of the second object. The first object has at least two first limbs and at least two first feet. The at least two first limbs are in a one-to-one correspondence with the at least two first feet, that is, each second limb is connected to a respective first foot. The second object has at least two second limbs and at least two second feet. The at least two second limbs are in a one-to-one correspondence with the at least two second feet, that is, each second limb is connected to a respective second foot.

Herein a hip joint of the first object may serve as a first start joint of the first limb, and an ankle joint of the first object may serve as a first end joint. In such case, a hip joint of the second object serves as a second start joint of the second limb, and an ankle joint of the second object serves as a second end joint.

The computer device may determine a length of each first foot, i.e., a first foot length. The computer device determines a first ratio of the limb speed of each first limb to the corresponding first foot length. That is, a first ratio for each first limb is obtained.

The computer device may determine a length of each second foot, i.e., a second foot length. In each iteration, the computer device determines a second ratio of the predicted speed of each second limb for such iteration to the corresponding second foot length. That is, a second ratio for each second limb in each iteration is obtained.

The computer device may determine a difference between the first ratio of the first limb and the second ratio of the corresponding second limb in a current iteration, and the difference serves as the temporal constraint between the first limb and the corresponding second limb in the current iteration. On a basis of similar processing, the temporal constraint between each second limb and the corresponding first limb may be obtained for each iteration.

Hence, the first foot length of each first foot and the second foot length of each second foot may be determined, such that the temporal constraint between the corresponding first limb and the corresponding second limb can be generated in each iteration based on the limb speed, the first foot length, the second foot length, and the predicted speed in such iteration. Hence, the migration of limb trajectories in different moments can be limited using the temporal constraint. Poses and coordination of the first limbs in different moments can be accurately migrated to the second limbs in corresponding moments, while avoiding problems such as "slipping" second limb after migration due to a timing disorder. The migration accuracy is further improved.

In all embodiments of the present disclosure, the step of determining the corrected trajectory information of the second limbs according to the single-limb constraints, the limb-coordination constraint, and the temporal constraint of the second limbs in each iteration may comprise following sub-steps.

Qualified offset(s) of the second limbs are determined from the candidate offset of all iterations according to the single-limb constraints, the limb-coordination constraint, and the temporal constraint of the second limbs in each iteration. The initial trajectory information of each second limb is corrected based on the qualified offset(s) of the second limbs to obtain the corrected trajectory information of the second limb.

The computer device may determine the total constraint of each second limb in each iteration according to the limb-coordination constraint in such iteration and the single-limb constraint of such second limb in such iteration. The qualified offset(s) of the second limb is determined from candidate offsets of all iterations according to the total constraint and the temporal constraint of such second limb in each iteration. The initial trajectory information of each second limb may be corrected according to the qualified offset(s) of such second limb to obtain the corrected trajectory information of such second limb.

In all embodiments of the present disclosure, the initial trajectory information may comprise an initial end position of the second limb. The initial end position of the second limb is corrected according to the qualified offset(s) of the second limb to obtain a corrected end position of the second limb. The corrected end position serves as corrected trajectory information.

Hence, the qualified offset(s) corresponding to each second limb are determined from the candidate offsets in all iterations according to single-limb constraint, the limb-coordination constraint, and temporal constraint of such second limb in each iteration, so that the determined qualified offset(s) can satisfy constraints such as a single-joint-chain constraint, a multi-joint chain constraint, and a timing constraint. Thus, the determined qualified offset(s) can be more accurate. The initial trajectory information of each second limb is corrected according to the qualified offset(s) of such second limb to obtain the corrected trajectory information of such second limb, so that the corrected trajectory information conforms better to characteristics of the second limb, improving trajectory migration accuracy.

In all embodiments of the present disclosure, as shown in FIG. 6, the step of selecting the qualified offset(s) according to the single-limb constraint, the limb-coordination constraint, and the temporal constraint, of each iteration may comprise following sub-steps for each second limb.

Step S602: Select, from the temporal constraints in all iterations, qualified temporal constraint(s) that satisfy a temporal condition.

The computer device obtains a preset temporal condition. The computer device selects, from the temporal constraints of each second limb in each iteration, temporal constraint(s) satisfying the temporal condition. Th selected temporal constraint(s)are the qualified temporal constraint(s).

In all embodiments of the present disclosure, the temporal condition may be a timing threshold, and the temporal constraint may comprise a timing constraining parameter. The computer device may compare the timing constraining parameter of the second limb in each iteration with the timing threshold and select the timing constraining parameter(s) less than the timing threshold as qualified timing constraining parameter(s). For example, the timing threshold may be $10^{-6}$, and the timing constraining parameter(s) less than $10^{-6}$ are selected as the target timing constraining parameter(s).

Step S604: Determine iteration(s) to which the qualified temporal constraint(s) belong, respectively.

For each qualified temporal constraint of each second limb, the computer device determines the iteration to which the qualified temporal constraint belongs as a qualified iteration of the second limb. On a basis of similar processing, the qualified iteration(s) of each second limb may be obtained.

The computer device may determine the qualified timing constraining parameter(s) of the second limbs and determines the iteration to which each target timing constraining parameter belongs.

Step S606: Select the qualitied candidate offset(s) from the candidate offset(s) of the iteration(s), where the single-limb constraints and the limb-coordination constraint in the respective coordination of each qualitied candidate offset satisfy a correction condition.

The correction condition is a condition for selecting the qualified offset from the candidate offsets of the qualified iterations.

The computer device may determine the total constraint of each second limb for each iteration according to the limb-coordination constraint of such iteration and the single-limb constraint of such second limb in such iteration.

The computer device selects the qualitied candidate offset(s) from the candidate offset(s) of the iteration(s), where the single-limb constraints and the limb-coordination constraint in the respective coordination of each qualitied candidate offset satisfy the correction condition.

In embodiments of the present disclosure, the single-limb constraint may comprise a single-joint-chain constraining parameter, the limb-coordination constraint may comprise a joint-chain coordination constraining parameter, and the total constraint may comprise a total constraining parameter. The correction condition may be that the total constraining parameter is minimum among the qualified iterations. The computer device selects the minimum total constraining parameter from the total constraining parameters of the second limb among the qualified iterations. The candidate offsets in the qualified iteration to which the minimum total constraining parameter belongs serves as the qualified offset of the second limb.

In this embodiment, the temporal constraint serves a limitation that needs to be satisfied. For each second limb, the qualified temporal constraint satisfying the temporal condition is selected from the temporal constraints of the second limb in all iterations, so that the candidate offset corresponding to the temporal constraint satisfying such condition can be determined. Problems such as a "slipping" limb due to a timing disorder can be effectively avoided after migration. The qualified iteration to which the individual qualified temporal constraint belongs is determined. The candidate offset that enables the single-limb constraints and limb-coordination constraint in the corresponding qualified iteration to satisfy a correction condition is selected from the candidate offsets of all qualified iterations and serves as the qualified offset of the second limbs. Hence, the candidate offsets selected using the temporal condition is subject to another selection to obtain qualified offset that enables the single-limb constraints and the limb-coordination constraint to satisfy the correction condition. An initial trajectory of the second limb is corrected using the qualified offset to obtain an accurate corrected trajectory.

In all embodiments of the present disclosure, each first limb may comprise a first joint chain, and the first joint chain comprises connected joints of the first object and parts among the connected joints of the first object, and each second limb comprises a second joint chain, and the second joint chain comprises connected joints of the second object and parts among the connected joints of the second object. The single-limb constraint is a constraint between the first joint chain and the second joint chain. The limb-coordination constraint is a constraint between coordination and second coordination, the first coordination indicates a relationship among the at least two first joint chains, and the second coordination indicates a relationship among the at least two second joint chains.

The first object has multiple first limbs. The first limb has multiple joints and at least one part connecting the multiple joints. The multiple joints of the first limb and the part(s) between the multiple joints coordinate to form the first joint chain. The multiple joints of the first limb comprise a first start joint and a first end joint.

The second object has multiple second limbs. The second limb has multiple joints and at least one part connecting the multiple joints. The multiple joints of the second limb and the part(s) between the multiple joints coordinate to form the second joint chain. The multiple joints of the second limb comprise a second start joint and a second end joint.

The single-limb constraint is the single-joint-chain constraint. The single-joint-chain constraint concerns a pose of a single joint chain. When the limb trajectory information is migrated, the pose of the first joint chain is migrated to the second joint chain, so that the second joint chain follows the pose of the first joint chain. The single-joint-chain constraint is configured for limiting the migrated pose, so that the pose migrated to the second joint chain conforms to the second joint chain.

The limb-coordination constraint is the multi-joint-chain coordination constraint. The multi-joint-chain coordination constraint concerns coordination of joint chains. When the limb trajectory information is migrated, first coordination between the two first joint chains is migrated to the two second joint chains to obtain second coordination between the two second joint chains. The multi-joint-chain coordination constraint is configured to limit the migrated coordination, so that migration of limb trajectories is more accurate when considering coordination between the two joint chains during the migration.

A method for processing trajectory information is provided according to an embodiment of the present disclosure. The method is applicable to a computer device and comprises following steps.

Respective limb start positions and limb end positions of multiple first limbs of a first object are obtained. A first length of each first limb and a second length of each second limbs of a second object are obtained. The limb start position and the limb end position of each first limb is adjusted according to the first length of the first limb and the corresponding second length to generate an initial start position and an initial end position of the corresponding second limb.

Limb pose information of each first limb is determined according to the limb start position, the limb end position, and the first length of the first limb. Limb coordination information among the multiple first limbs is determined according to the respective limb start positions and the respective limb end positions of the multiple first limbs.

A candidate offset of each iteration is obtained. For each iteration, the initial start position and the initial end position of each second limb are corrected according to the candidate offset of such iteration to obtain a predicted start position and a predicted end position of such second limb in such iteration.

For each iteration, predicted pose information of each second limb in such iteration is determined according to the predicted start position, the predicted end position, and the second length corresponding to each second limb, and predicted coordination information among the multiple second limbs in such iteration is determined according to the respective predicted start positions and the predicted end positions of the multiple second limbs in such iteration,.

For each iteration, a single-limb constraint between each first limb and the corresponding second limb is generated according to the limb pose information of the first limb and the predicted pose information of the corresponding second limb for such iteration, and a limb-coordination constraint between the first object and the second object is generated according to the limb coordination information among the multiple first limbs and the predicted coordination information for such iteration.

A weight parameter of the single-limb constraint is determined according to the respective limb start positions and limb end positions of the multiple first limbs. A weight parameter of the limb-coordination constraint is determined according to the weight parameter of the single-limb constraint. For each iteration, a total constraint of the second limbs is determined according to the limb-coordination constraint of such iteration, the single-limb constraints of the second limbs of such iteration, and the weight parameters.

For each iteration, a predicted speed of each second limb is determined according to the predicted end position of each second limb and the candidate offset of such iteration.

First foot lengths of respective feet connected to the multiple first limbs and second foot lengths of respective feet connected to the multiple second limbs are determined. For each iteration, a temporal constraint between the first object and the second object is generated according to the individual limb speed, each first foot length, each second foot length, and the individual predicted speed for such iteration.

For each second limb, qualified temporal constraint(s) satisfying a temporal condition are selected from the temporal constraints of the second limb in all iterations. Qualified iteration(s) to which the qualified temporal constraint(s) belongs are determined. The candidate offset that enables the total constraint of the corresponding qualified iteration to satisfy a correction condition is selected from the candidate offsets of all qualified iteration(s) and serves as a qualified offset of the second limb.

The initial trajectory information of each second limb is corrected according to the qualified offset of the second limb to obtain corrected trajectory information of the second limbs.

A method for processing trajectory information is provided according to an embodiment of the present disclosure. The method is applicable to an animation retargeting scene. Animation retargeting is intended to migrate an animation resource of an existing object to a new object. Based on this technology, when a new animation object is completely manufactured, an animation does not need to be additionally manufactured for the new animation object, but an existing animation may be reused at zero costs. The animation retargeting is a necessary part of a mainstream animation production procedure. The method for processing trajectory information in this embodiment may replace a conventional foot trajectory migration method for animation retargeting and is directly combined with an existing animation production procedure. In terms of a specific application, the method for processing trajectory information in this embodiment may be applied to any scene in which an animation needs to be reused, for example, a three-dimensional game, a meta-universe product, virtual live streaming, or film and television media, but is not limited thereto. A foot trajectory of an animation sequence may be migrated between any objects without an animator making a corresponding animation for each object, thereby implementing zero-cost reuse of animation materials.

The animation sequence is logic/data for driving an object to move and achieve a dynamic effect, and is widely applied to fields such as games, film and television, for example, object actions in a three-dimensional game. The "animation sequence" in this embodiment may be a physical animation of an object in a 3D scene.

The animation retargeting is migration of the animation sequence between different objects. For example, there is an animation sequence of object A and a model of object B. The animation retargeting is migrating the animation sequence of object A to B, and adapting to an object characteristic of object B while keeping action features such as joint bending and action trend of object A. The object characteristics are, for example, a framework topology and a model shape.

The foot trajectory, i.e., the limb trajectory information, is a trajectory formed by foot positions of all frames of an object in a given animation sequence. A human object is used as an example. A target limb is a lower limb of the human object, and the foot position is a position sequence of an ankle joint. A first object is a character of a to-be-migrated animation, i.e., object A in an animation retargeting definition. An original animation, i.e., the limb trajectory information, is a to-be-migrated animation sequence, i.e., an animation sequence of object A in the animation retargeting definition. A second object is a target of animation migration, i.e., object B in the animation retargeting definition.

A binding pose is a preset pose. When a modeler produces a three-dimensional model, a default pose used by a binding skeleton is generally an A-shaped pose (A-Pose) or a T-shaped pose (T-Pose), as shown in FIG. 3 and FIG. 4.

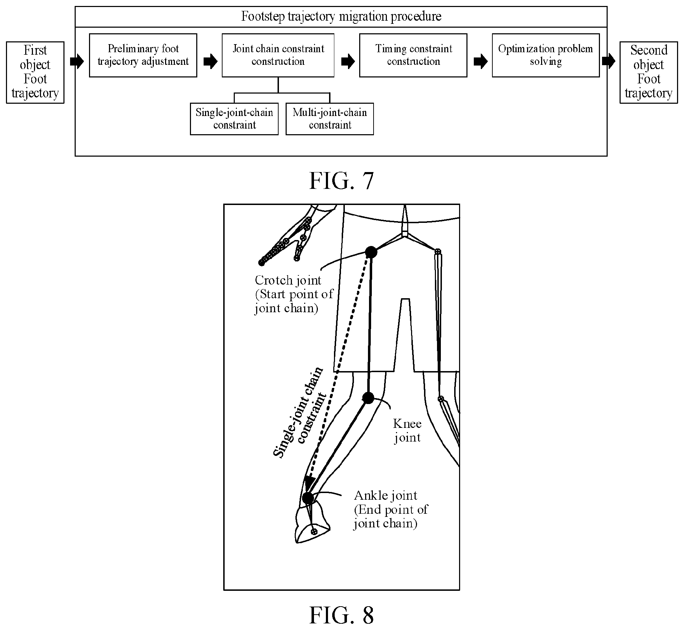

An overall procedure of a method for processing trajectory information in this embodiment is shown in FIG. 7. An input is a foot trajectory of a first object, and an output is a foot trajectory of a second object under the same action. The foot trajectory of the first object may be obtained by reading an offline animation file in an .fbx format or by using a real-time animation stream. The overall procedure is divided into four operations. 1. Preliminarily adjust a foot trajectory of an original animation. 2. Construct a joint chain constraint for a lower limb of an object. 3. Construct a timing constraint for the foot trajectory. 4. Construct and solve a migration problem with constraints, and output a foot trajectory of a second object.

Herein a wavy line is added to a corresponding symbol of the first object to represent a corresponding physical quantity of the second object. For example, $L$ represents a lower limb length of the first object, and $\tilde{L}$ represents a lower limb length of the second object.

1. Preliminary adjust a foot trajectory of an original animation

The original animation is divided into multiple frames according to duration, and the foot trajectory of the original animation is adjusted according to a body ratio of the first object to the second object. To be specific, the lower limb length of the first object is denoted as L. The foot trajectory of the first object is $X_k$, including a three-dimensional coordinate of a footstep of the first object in each frame, i.e., a limb start position, and may include a limb end position. The foot trajectory of the second object is $\widetilde{X_k}$, including an initial three-dimensional coordinate of a footstep of the second object in each frame, i.e., an initial start position, and may include an initial end position. The foot trajectory $\widetilde{X_k}$ of the second object may be calculated by using the following equation:

$$\widetilde{X_k} = \frac{\tilde{L}}{L} X_k.$$

For example, the foot trajectory $X_k$ of the first object includes the three-dimensional coordinates of the footstep of the first object in frame k, and the initial three-dimensional coordinates corresponding to the footstep of the second object in frame k may be obtained by using the foregoing equation.

In this operation, the foot trajectory of the original animation is roughly adjusted, and the obtained foot trajectory may be adapted to a body ratio of the second object and is used as an input of a subsequent operation.

2. Construct a joint chain constraint of a lower limb of an object

The lower limb of the object is modeled into a data format of a joint chain, and foot trajectory information of the original animation is encoded into a constraint of the joint chain, including the following operations. 1) Encode a pose of a single lower limb by using a single-joint-chain constraint. 2) Encode coordination information among lower limbs by using a multi-joint chain constraint. Specific processes are as follows.

1) Encode a pose of a single lower limb by using a single-joint-chain constraint

A three-dimensional coordinate $X_k$ of a footstep of a first object in frame k of an animation may include three-dimensional coordinates of a start and end (i.e. crotch and ankle joints) of joint chain j of a lower limb of the first object, i.e. $Ps_j^k,\ Pe_j^k$. An initial three-dimensional coordinate $\widetilde{X_k}$ corresponding to a footstep of a second object in frame k includes initial three-dimensional coordinates of a start point and initial three-dimensional coordinates of an end point of joint chain j of a lower limb of the second object. According to candidate offset pair, the initial three-dimensional coordinates of the start point and the end point corresponding to the foot of the second object in frame k are corrected to obtain respective predicted three-dimensional coordinates, i.e. the predicted start position and the predicted end position, of the start point and the end point corresponding to the footstep of the second object in frame k.

Considering a pose of a single lower limb, the pose is encoded as a normalized vector pointing from a start to an end of a lower limb joint chain. An example in which the first object and the second object are both human objects is used. The joint chain includes several joint nodes on the human object that have a parent-child relationship and corresponding skeletons. As shown in FIG. 8, a crotch joint, a knee joint, an ankle joint, and skeletons between the joints are organized into the joint chain. Transformation such as translation and rotation of a joint may be adjusted to drive skeleton motion on the joint chain, thereby driving motion of the entire object.

The three-dimensional coordinates of the start and the end (i.e., the crotch and ankle joints) of joint chain j in frame k of the animation are denoted as $Ps_j^k,\ Pe_j^k$. A sum of lengths (i.e., lengths connecting the crotch joint, the knee joint, and the ankle joint) of the skeletons included in joint chain j is $L_j$. The corresponding normalized vector $v_j^k$ is:

$$v_j^k = \frac{Pe_j^k - Ps_j^k}{L_j}.$$

According to the equation, limb pose information $v_j^k$ corresponding to the lower limb of the first object in frame k may be obtained. According to the predicted three-dimensional coordinates of the start and the predicted three-dimensional coordinate of the end of joint chain j of the second object, predicted pose information $\tilde{v}_j^k$ corresponding to the lower limb of the second object in frame k may be obtained in a similar manner.

The single-joint-chain constraint is intended to keep poses of single lower limbs of the first object and the second object consistent. The number of joint chains of the lower limb of the object is denoted as M. The single-joint-chain constraints $C_{sc}^k$ in frame k of the animation may be expressed defined as:

$$C_{sc}^k = \sum_{j=0}^{M} ||v_j^k - \tilde{v}_j^k||.$$

2) Encode coordination information among lower limbs by using a multi-joint chain constraint

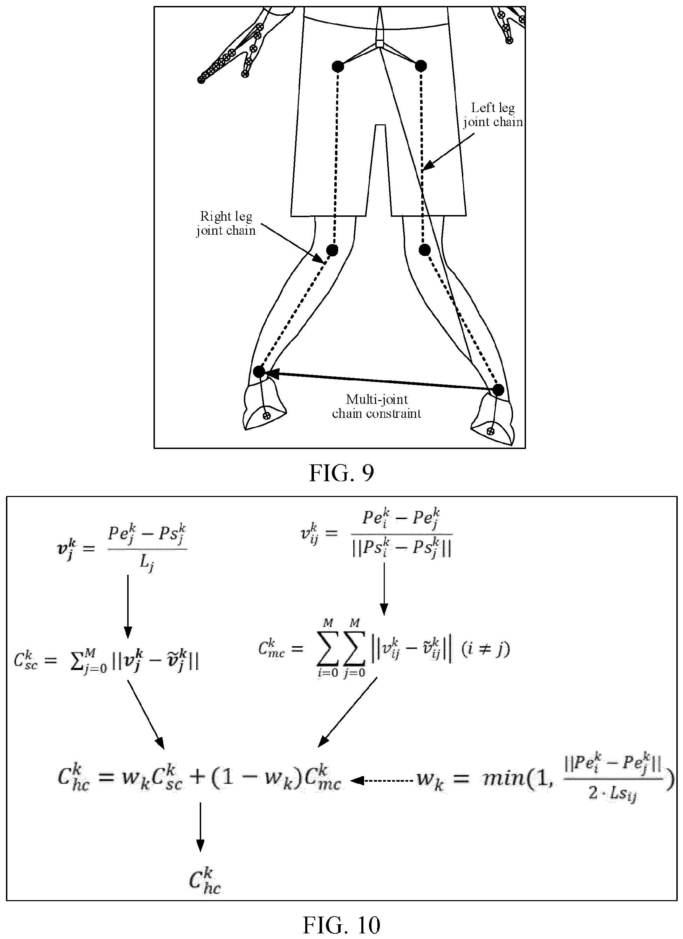

The multi-joint chain constraint is a joint-chain coordination constraint. Considering coordination information among lower limbs, the coordination information is encoded as a normalized vector between joint chain ends of different lower limbs. As shown in FIG. 9, a human object is used as an example. Left and right leg joint chains of a first object in frame k of an original animation are joint chain i and joint chain j. Positions of end joints (i.e., ankle joints) thereof are $Pe_i^k$, $Pe_j^k$. Positions of start joints (i.e., crotch joints) of the two joint chains in a binding pose are $Ps_i^k$, $Ps_j^k$. Then, a normalized vector between joint chain i and joint chain j of the first object is defined as:

$$v_{ij}^k = \frac{Pe_i^k - Pe_j^k}{||Ps_i^k - Ps_j^k||}.$$

For example, left and right leg joint chains of a first object in frame k of an original animation are joint chain 0 and joint chain 1. Positions of end joints thereof are $Pe_0^k$, $Pe_1^k$. Positions of start joints of the two joint chains in a binding pose are $Ps_0$, $Ps_1$. Then, a normalized vector between joint chain 0 and joint chain 1 of the first object is defined as:

$$v_{01}^k = \frac{Pe_0^k - Pe_1^k}{||Ps_0^k - Ps_1^k||}.$$

The normalized vector between joint chain 0 and joint chain 1 of the first object is limb coordination information among joint chain 0 and joint chain 1 of the first object. On a basis of similar processing, predicted coordination information $\tilde{v}_{01}^k$ between joint chain 0 and joint chain 1 of a second object may be obtained.

The foregoing normalized vectors may be obtained for all joint chains of lower limbs of the object. The number of joint chains of the lower limbs of the object is denoted as M. A multi-joint chain constraint $C_{mc}^k$ in frame k of the animation is defined as:

$$C_{mc}^k = \sum_{i=0}^{M} \sum_{j=0}^{M} \left| \left| v_{ij}^k - \tilde{v}_{ij}^k \right| \right| \ (i \neq j).$$

3) Combine the single-joint-chain constraint and the multi-joint chain constraint

As shown in FIG. 10, according to actions of a lower limb of an object, the foregoing two types of lower limb semantics are adaptively combined. Three-dimensional coordinates between end joints of joint chain i and j oint chain j in frame k of an original animation are $Pe_i^k$, $Pe_j^k$, and a Euclidean distance between start joints in a binding pose of an original person is $Ls_{ij}$. A target constraint $C_{hc}^k$ obtained after combination in frame k of the animation is defined as:

$$C_{hc}^k = w_k C_{sc}^k + (1 - w_k)C_{mc}^k.$$

The weight parameter

$$w_k = \min(1, \frac{||Pe_i^k - Pe_j^k||}{2 \cdot Ls_{ij}}).$$

3. Construct a foot trajectory timing constraint

The construction of a timing constraint for the foot trajectory is intended to keep dynamic information of the foot trajectory of the original person, to avoid slipping. A speed of an end joint of lower limb joint chain j in frame k of the original animation is $vel_j^k$ and a foot length of the first object is $L_f$ (the foot length of a human object is a Euclidean distance between an ankle joint and a tiptoe joint). A timing constraint $C_t^k$ in frame k of the animation is defined as:

$$C_t^k = \frac{\widetilde{vel_j^k}}{\widetilde{L_f}} - \frac{vel_j^k}{L_f}.$$

The foot length of the second object is $\widetilde{L_f}$, and the speed of the end joint of lower limb joint chain j of the second object in frame k is $\widetilde{vel_j^k}$. $\widetilde{vel_j^k}$ is obtained by calculation according to a predicted three-dimensional coordinate of the end joint in frame k and a predicted three-dimensional coordinate of the end joint in an adjacent frame.

4. Construct and solve a migration problem

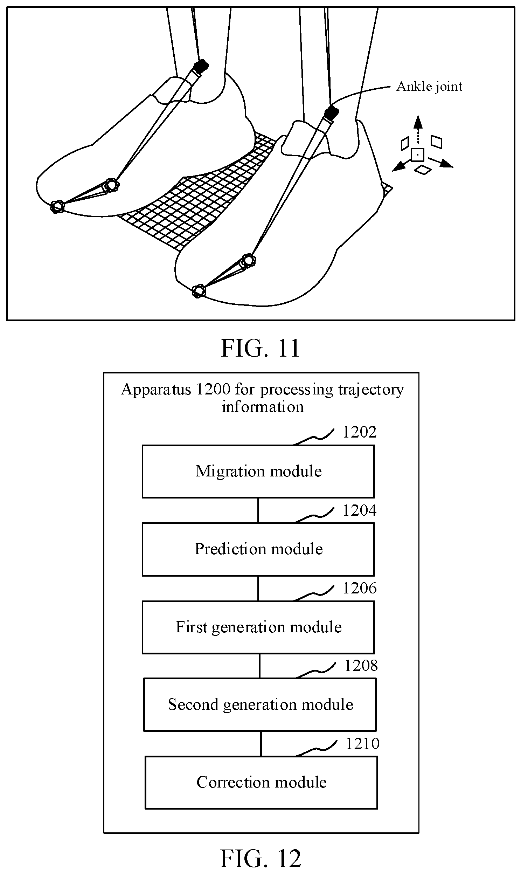

A migration problem with constraints is constructed based on a single-joint-chain constraint, a double-joint chain constraint, and a timing constraint, to obtain a foot trajectory of a target person by solving. An offset is an offset of an initial foot trajectory of the second object in a horizontal plane direction. A human object is used as an example. As shown in FIG. 11, an offset is an offset of left and right ankle joints (black parts) in directions of a horizontal axis and a vertical axis.

In a migration process, to avoid an apparent defect such as slipping, the timing constraint in operation 3 is set to a hard constraint. To be specific, a solution result needs to satisfy the constraint. The joint chain constraint in operation 2 has a relatively low priority and is set to a soft constraint. To be specific, the soft constraint is satisfied as far as possible on the premise that the hard constraint is satisfied. In frame k of the animation, a constraint definition of a migration problem is specifically as follows:

$$\min\{ C_{hc}^k \}$$

$$\text{s.t. } C_t^k < 10^{-6} .$$

A local migration algorithm COBYLA is used for migration solving, and a convergence condition is that a change amount between offsets in two adjacent iterations is less than or equal to $10^{-5}$. To be specific, when a difference between candidate offsets used in two adjacent iterations is less than $10^{-5}$, the iteration is stopped. The candidate offsets used in the iterations are different. For a processing procedure of each iteration, refer to operation 1 and operation 4, to obtain a total constraining parameter $C_{hc}^k$ and a timing constraining parameter $C_t^k$ in each iteration.

After the total constraining parameter $C_{hc}^k$ and the timing constraining parameter $C_t^k$ in each iteration are obtained, a timing constraining parameter less than $10^{-6}$ is screened out from the respective timing constraining parameters $C_t^k$, and the iteration to which the screened timing constraining parameter belongs is determined. The total constraining parameters $C_{hc}^k$ of the iterations are determined, a minimum total constraining parameter $C_{hc}^k$ is selected from the total constraining parameters $C_{hc}^k$ of the iterations, and a candidate offset in the iteration to which the minimum total constraining parameter $C_{hc}^k$ belongs is used as a qualified offset, to obtain an offset of the foot trajectory of the second object in the horizontal plane direction. The qualified offset is applied to the foot trajectory of the second object, and a final foot trajectory of the second object is outputted.

In this embodiment, another migration solving mode, including but not limited to a gradient-based SLSQP algorithm or a global migration-based StoGO algorithm, may be used for replacing the COBYLA algorithm.

The method for processing trajectory information in this embodiment is a foot trajectory migration method for animation retargeting. By modeling a leg by using a joint chain, foot trajectory information of an original animation is encoded into constraint of the joint chain. A migration problem with constraints is constructed based on the information, a foot trajectory of a target person is obtained through solving, and the problem of foot trajectory migration in the animation retargeting is solved.

The method for processing trajectory information in this embodiment provides a constraint construction solution based on a single-joint-chain and a double-joint chain, and an adaptive constraint combination mode, to simultaneously encode limb pose and limb coordination information of an original animation, and output a foot trajectory reserving a limb pose of the original animation and an coordination among the lower limbs. In addition, the proposed timing constraint may avoid problems such as slipping existing in a foot trajectory migration process. The method for processing trajectory information is applicable to foot trajectory migration between objects having any number of joints of lower limbs and has strong generalization and robustness.

The operations in the flowcharts involved in the foregoing embodiments are displayed in sequence based on indication of arrows, but the operations are not necessarily performed sequentially according to a sequence indicated by the arrows. Unless otherwise explicitly specified in the present disclosure, execution of the operations is not strictly limited, and the operations may be performed in other sequences. Moreover, at least some of the operations in flowcharts in the above embodiment may include multiple sub-operations or multiple stages. The operations or stages are not necessarily performed at the same moment but may be performed at different moments. Execution of the operations or stages is not necessarily sequentially performed but may be performed alternately with other operations or at least some operations or stages of other operations.

Based on the same inventive concept, embodiments of the present disclosure further provide an apparatus for processing trajectory information for implementing the foregoing method for processing trajectory information. Implementation solutions provided by the apparatus for solving problems are similar to the implementation solutions described in the foregoing method. Therefore, for specific limitations in one or more apparatus for processing trajectory information embodiments provided below, refer to the limitations on the method for processing trajectory information in the foregoing descriptions. Details are not described herein again.

In embodiments of the present disclosure, as shown in FIG. 12, an apparatus for processing trajectory information 1200 is provided, including: a migration module 1202, a prediction module 1204, a first generation module 1206, a second generation module 1208, and a correction module 1210.

The migration module 1202 is configured to: obtain respective limb trajectory information of at least two first limbs of a first object, where the at least two first limbs of the first object correspond to at least two second limbs, respectively, of a second object; and migrate the limb trajectory information of each first limb to the respective second limb of such first limb to obtain initial trajectory information of each second limb.

The prediction module 1204 is configured to: determine, according to the limb trajectory information of each first limb, limb pose information of each first limb and limb coordination information among the at least two first limbs; and pre-correct the initial trajectory information of each second limb to obtain predicted pose information of each second limb and predicted coordination information among the at least two second limbs.

The first generation module 1206 is configured to determine a single-limb constraint between each first limb and the respective second limb of such first limb according to the limb pose information of such first limb and the predicted pose information of the respective second limb.

The second generation module 1208 is configured to determine a limb-coordination constraint between the first object and the second object according to the limb coordination information and the predicted coordination information.

The correction module 1210 is configured to correct the initial trajectory information of all second limbs according to the single-limb constraint of each second limb and the limb-coordination constraint to obtain corrected trajectory information of each second limb.

In this embodiment, the respective limb trajectory information of the at least two first limbs of the first object are obtained, and the at least two first limbs of the first object correspond to the at least two second limbs, respectively, of the second object. Thereby, the respective second limb to which the limb trajectory information of each first limb needs to be migrated can be determined. The limb trajectory information of each first limb of each first object is migrated to the corresponding second limb of the second object, and hence the initial trajectory information of each second limb can be obtained. The limb pose information of each first limb and the limb coordination information among the at least two first limbs are determined according to the limb trajectory information of each first limb, and hence the pose of each first limb and the coordination among the first limbs can be determined. The respective initial trajectory information of each second limbs is pre-corrected to obtain a predestination on respective poses of the second limbs and the coordination among the second limbs. The single-limb constraint between each first limb and the corresponding second limb is determined according to the limb pose information of the first limb and the predicted pose information of the second limb, and the generated single-limb constraint enables the pose of the second limb to follow that of the first limb. The limb-coordination constraint between the first object and the second object is determined according to the limb coordination information and the predicted coordination information, and the limb-coordination constraint enables coordination of the second limbs to follow that of the first limbs. The initial trajectory information of each second limb is corrected according to the individual single-limb constraints and the limb-coordination constraint to obtain the corrected trajectory information of all second limbs. Thereby, the second limbs of the second object cannot only have poses consistent with those of the first limbs of the first object but also retain their coordination consistent with coordination among the first limbs. Hence, the trajectory information is accurately migrated.

In all embodiments of the present disclosure, the migration module 1202 may be further configured to: determine a first length of each first limb and a second length of each second limb; and adjust the limb trajectory information of each first limb according to the first length of such first limb and the second length of the respective second limb to obtain the initial trajectory information of the respective second limb.

In this embodiment, the first length of each first limb and the second length of each second limb are determined. For each first limb, the limb trajectory information of the first limb is adjusted according to the first length of the first limb and the second length of the corresponding second limb to migrate its limb trajectory information to the corresponding second limb. Migration is performed with reference to limb lengths, so that the migrated trajectory information conforms to limbs of a second object to scale, and hence the initial trajectory information of each second limb are coarsely generated.

In all embodiments of the present disclosure, the prediction module 1204 may be further configured to, for each iteration: obtain a candidate offset; and pre-correct the initial trajectory information of each second limb according to the candidate offset to obtain the predicted pose information of each second limb and the predicted coordination information among the at least two second limbs.

The correction module 1210 may be further configured to correct the initial trajectory information of all second limbs, according to the single-limb constraints for each iteration and the limb-coordination constraint for each iteration, to obtain the corrected trajectory information of each second limb.

In this embodiment, the candidate offset of each iteration is obtained. For each iteration, the initial trajectory information of each second limb is pre-corrected based on the candidate offset of the iteration to obtain the predicted pose information of each second limb and the predicted coordination information among the at least two second limbs. The initial trajectory information may be pre-corrected using the candidate offset, such that the pose of each second limb in the second object and the coordination among the second limbs are predicted through the pre-correction. In addition, the pre-correction is performed in each iteration, and the pose of each second limb of the second object and the coordination among the second limbs may be predicted repeatedly through multiple iterations. In each iteration, the single-limb constraint between the first limb and the second limb is determined according to the limb pose information before the migration and the predicted pose information after the pre-correction. Hence, the generated single-limb constraint enables each second limb to have a pose consistent with that of the corresponding first limb, because a pose characteristic of the individual limb is considered during migration of the limb information. The limb-coordination constraint between the first object and the second object in each iteration is generated according to the limb coordination information and the predicted coordination information of such iteration. The limb-coordination constraint enables coordination between the second limbs to follow the coordination among the first limbs. Thereby, the migration of trajectory information is more accurate.

In all embodiments of the present disclosure, the prediction module 1204 may be further configured to: pre-correct the initial trajectory information of each second limb according to the candidate offset to obtain predicted trajectory information of each second limb; determine the predicted pose information of each second limb according to the predicted trajectory information of such second limb; and determine the predicted coordination information among the at least two second limbs according to the predicted trajectory information of all second limb.

In this embodiment, for each iteration, an initial start position and an initial end position of each second limb are corrected using the candidate offset of such iteration, and hence a predicted start position and a predicted end position for such second limb in such iteration are obtained. That is, corresponding position information can be obtained based on correction of the particular candidate offset. According to the predicted start position and the predicted end position for each second limb in the iteration, the pose information of each second limb and the coordination information among the second limbs can be accurately predicted.

In all embodiments of the present disclosure, the initial trajectory information of each second limb may comprise an initial start position and an initial end position of such second limb. The prediction module 1204 is further configured to: determine a second length of such second limb; determine the predicted pose information of such second limb according to the predicted start position, the predicted end position, and the second length of such second limb; and determine the predicted coordination information among the at least two second limbs according to the predicted start position of all second limbs and the predicted end position of all second limbs.

In this embodiment, for each iteration, the initial start position and the initial end position of each second limb are corrected using the candidate offset of such iteration, and hence a predicted start position and a predicted end position for such second limb in such iteration are obtained. That is, corresponding position information can be obtained based on correction of the particular candidate offset. According to the predicted start position and the predicted end position for each second limb in the iteration, the pose information of each second limb and the coordination information among the second limbs can be accurately predicted.

In all embodiments of the present disclosure, the correction module 1210 may be further configured to: select, from the candidate offsets of all iterations, one or more qualified offsets according to the single-limb constraints of each iteration and the limb-coordination constraint of each iteration; and correct, according to the one or more qualified offsets, the initial trajectory information of such second limb to obtain the corrected trajectory information of such second limb.

In this embodiment, the qualified offset is selected using the single-limb constraints and the limb-coordination constraint in each iteration, and the selected qualified offset can meet limitations on, for example, the single-limb constraint and the limb coordination constraint. Hence, the determined qualified offset is more accurate. The initial trajectory information of each second limb is corrected according to the qualified offset of the second limb to obtain corrected trajectory information of the second limb. The corrected trajectory information can conform to characteristics of the second limbs bitter, thereby improving trajectory migration accuracy.

In all embodiments of the present disclosure, the correction module 1210 may be further configured to: determine a limb speed of each first limb according to the limb trajectory information of such first limb; determine, in each iteration, a predicted speed of each second limb according to the predicted trajectory information of such second limb; determine, for each iteration, a temporal constraint between each first limb and the respective second limb of such first limb according to the limb speed of such first limb and the predicted speed of the respective second limb; and select the one or more qualified offset according to the single-limb constraint, the limb-coordination constraint, and the temporal constraint, of each iteration.

In this embodiment, the limb speed of each first limb is determined according to the limb trajectory information of each first limb. For each iteration, the predicted speed of each second limb is determined based on the initial trajectory information of each second limb and the candidate offset of such iteration, and the temporal constraint between the first object and the second object is generated for such iteration based on the limb speed of the first limbs and the predicted speed. Hence, migration of limb trajectory through different moments is limited using the temporal constraint. For each second limb, the qualified offset is selected from the candidate offsets of the iterations according to constraints, e.g., the single-limb constraint, the limb-coordination constraint, and the temporal constraint of each second limb in each iteration. Hence, the determined qualified offset conforms better to characteristics of the second limb, improving trajectory migration accuracy.

In all embodiments of the present disclosure, the limb trajectory information may comprise limb end positions of each first limb of at least two moments, respectively.

The correction module 1210 is further configured to, for each first limb: determine a first temporal relationship of such first limb between the at least two moments; and determine the limb speed of such first limb according to the limb end positions of the two moments and the first temporal relationship.

In this embodiment, for each first limb, the first temporal relationship of the first limb is determined for the at least two moments, that is, a temporal relationship between different moments can be determined for such first limb. The limb speed of the first limb can be accurately determined according to the limb end positions of the first limb of the at least two moments and the first temporal relationship.

In all embodiments of the present disclosure, the initial trajectory information comprises initial end positions of each second limb of at least two moments, and the predicted trajectory information may comprise predicted end positions of each second limb of the at least two moments.

The correction module 1210 is further configured to, for each second limb: determine a second temporal relationship of such second limb between the at least two moments; and determine the predicted speed of the second limb according to the predicted end positions of the second limb of the at least two moments and the second temporal relationship.

In this embodiment, for each second limb, the second temporal relationship of the second limb is determined for the at least two moments, that is, a temporal relationship between different moments can be determined for such second limb. The predicted speed of the second limb can be accurately determined according to the limb end positions of the second limb of the at least two moments and the second temporal relationship.

In all embodiments of the present disclosure, a first limb of the at least two first limbs may be connected to a first foot of the first object, and the respective second limb of the first limb is connected to a second foot of the second object. The correction module 1210 is further configured to: determine a first foot length of the first foot and a second foot length of the second foot; and determine the temporal constraint between the first limb and the respective second limb for each iteration according to the limb speed, the first foot length, the second foot length, and the predicted speed of such iteration.

In this embodiment, the first foot length of each first foot and the second foot length of each second foot may be determined, such that the temporal constraint between the corresponding first limb and the corresponding second limb can be generated in each iteration based on the limb speed, the first foot length, the second foot length, and the predicted speed in such iteration. Hence, the migration of limb trajectories in different moments can be limited using the temporal constraint. Poses and coordination of the first limbs in different moments can be accurately migrated to the second limbs in corresponding moments, while avoiding problems such as "slipping" second limb after migration due to a timing disorder. The migration accuracy is further improved.

In all embodiments of the present disclosure, the correction module 1210 may be further configured to: select, from the temporal constraints in all iterations, one or more qualified temporal constraints that satisfy a temporal condition; determine one or more iterations to which the one or more qualified temporal constraints belong respectively; and select the one or more qualitied candidate offsets from the candidate offsets of the one or more iterations, where the single-limb constraints and the limb-coordination constraint in the respective iteration of each qualitied candidate offset satisfy a correction condition.

In all embodiments of the present disclosure, the correction module 1210 may be further configured to: determine a weight parameter of the single-limb constraints of all second limbs and a weight parameter of the limb-coordination constraint; determine a total constraint of all second limbs according to the limb-coordination constraint, the single-limb constraints, and the weight parameters; and correct the initial trajectory information of all second limbs according to the total constraint to obtain the corrected trajectory information of each second limb.

In this embodiment, the weight parameter of the single-limb constraints and the weight parameter of the limb-coordination constraint are determined, that is, proportions of the single-limb constraint and the multi-joint chain constraint are determined for the trajectory migration. Throughout the iterations, the total constraint for all second limbs in each iteration is accurately determined according to the limb-coordination constraint, the single-limb constraints of all second limbs, and the weight parameters. Hence, the finally selected offset is based on a combination of the single-limb constraints and the multi-joint chain constraint. The corrected trajectory information of all second limbs can be accurately determined.

In all embodiments of the present disclosure, the limb trajectory information of each first limb may comprise a limb start position and a limb end position of such first limb. The correction module 1210 is further configured to: determine the weight parameter of the single-limb constraints of all second limbs according to the limb start positions and the limb end positions of all first limbs; and determine the weight parameter of the limb-coordination constraint according to the weight parameter of the single-limb constraints.

In this embodiment, the weight parameter of the single-limb constraints is determined according to the limb start position and the limb end position of each first limb, that is, a proportion of the single-limb constraints in trajectory migration are determined based on the limb start positions and the limb end positions of the first limbs.

The weight parameter of the limb-coordination constraint is determined according to the weight parameter of the single-limb constraints, that is, a proportion of the limb-coordination constraint in the trajectory migration is determined. The corrected trajectory information of a second limb can be more accurately calculated according to the single-limb constraints and the limb-coordination constraint.

In all embodiments of the present disclosure, the limb trajectory information of each first limb may comprise a limb start position and a limb end position of such first limb.

The prediction module 1204 is further configured to, for each first limb: determine a first length of such first limb; determine the limb pose information of such first limb according to the limb start position, the limb end position, and the first length of the first limb; and determine the limb coordination information among the at least two first limbs according to the limb start position and the limb end position of each first limb.

In this embodiment, the first length of each first limb is determined, and the limb pose information of the first limb can be accurately determined according to the limb start position, the limb end position, and the first length of the first limb. The coordination among the first limbs can be accurately determined according to the limb start position and the limb end position of each first limb.

In all embodiments of the present disclosure, each first limb may comprise a first joint chain, and the first joint chain comprises connected joints of the first object and parts among the connected joints of the first object. Each second limb comprises a second joint chain, and the second joint chain comprises connected joints of the second object and parts among the connected joints of the second object. The single-limb constraint is a constraint between the first joint chain and the second joint chain. The limb-coordination constraint is a constraint between coordination and second coordination, the first coordination indicates a relationship among the at least two first joint chains, and the second coordination indicates a relationship among the at least two second joint chains.

In this embodiment, the single-limb constraint is a single-joint-chain constraint, and the single-joint-chain constraint is a constraint on a pose of a single joint chain. During migration of the limb trajectory information, the pose of the first joint chain is migrated to the second joint chain, so that the pose of the second joint chain follows the pose of the first joint chain. The migrated pose is limited using the single-joint-chain constraint, so that the pose migrated to the second joint chain further conforms to the second joint chain. The limb-coordination constraint is a multi-joint-chain coordination constraint, and the multi-joint-chain coordination constraint is a constraint on coordination among the joint chains. During migration of the limb trajectory information, the first coordination between two first joint chains is migrated to two second joint chains, such that the second coordination between the two second joint chains can be obtained. During the migration, in consideration of cooperation between the two joint chains, migration of limb trajectories is more accurate.

The modules in the foregoing apparatus for processing trajectory information may be implemented in whole or in part by software, hardware, and a combination thereof. The foregoing modules may be built in or independent of a processor of a computer device in a form of hardware, or may be stored in a memory of the computer device in a form of software, for the processor to invoke to execute operations corresponding to the foregoing modules.

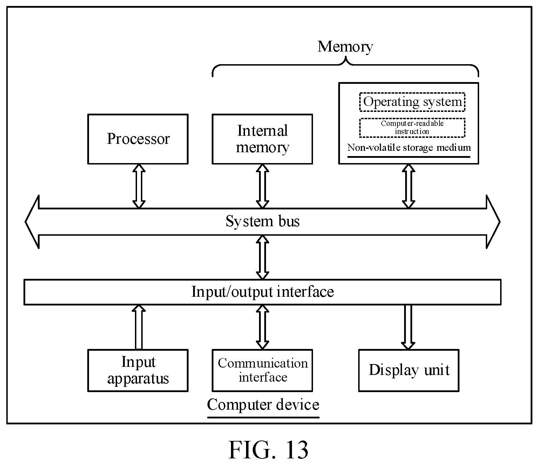

In embodiments of the present disclosure, a computer device is provided. The computer device may be a terminal or a server. The computer device is, for example, a terminal. A diagram of an internal structure of the terminal may be shown in FIG. 13. The computer device includes a processor, a memory, an input/output interface, a communication interface, a display unit, and an input apparatus. The processor, the memory, and the input/output interface are connected via a system bus. The communication interface, the display unit, and the input apparatus are connected to the system bus via the input/output interface. The processor of the computer device is configured to provide computing and control capabilities. The memory of the computer device includes a non-volatile storage medium and an internal memory. The non-volatile storage medium has an operating system and computer-readable instructions stored therein. The internal memory provides an operating environment for the operating system and the computer-readable instructions in the non-volatile storage medium. The input/output interface of the computer device is configured to exchange information between the processor and an external device. The communication interface of the computer device is configured to communicate with an external terminal in a wired or wireless mode. The wireless mode may be implemented through WIFI, a mobile cellular network, near field communication (NFC), or another technology. The computer-readable instructions, when executed by the processor, implement a method for processing trajectory information. The display unit of the computer device is configured to form a visible picture, and may be a display screen, a projection apparatus, or a virtual reality imaging apparatus. The display screen may be a liquid crystal display screen or an e-ink display screen. The input apparatus of the computer device may be a touch layer covering the display screen, or may be a button, a trackball, or a touchpad disposed on a housing of the computer device, or may be an external keyboard, touchpad, mouse, or the like.

It will be appreciated by a person skilled in the art that the structure shown in FIG. 13 is merely a block diagram of a partial structure related to a solution in the present disclosure, and does not constitute a limitation to the computer device to which the solution in the present disclosure is applied. Specifically, the computer device may include more or fewer components than those shown in the figure, or some components may be combined, or a different component layout may be used.

In embodiments of the present disclosure, a computer device is further provided. The computer device includes a memory and a processor. The memory has computer-readable instructions stored therein. The processor, when executing the computer-readable instructions, implements the operations in the foregoing method embodiments.

In embodiments of the present disclosure, a computer-readable storage medium is provided. The computer-readable storage medium has computer-readable instructions stored therein. The computer-readable instructions, when executed by a processor, implement the operations in the foregoing method embodiments.

In embodiments of the present disclosure, a computer program product is provided, including computer-readable instructions. The computer-readable instructions, when executed by a processor, implement the operations in the foregoing method embodiments.

User information (including, but not limited to, user equipment information, user personal information, and the like) and data (including, but not limited to, data for analysis, stored data, displayed data, and the like) involved in the present disclosure are all information and data authorized by users or fully authorized by all parties, and collection, use, and processing of relevant data need to comply with relevant laws, regulations, and standards of relevant countries and regions.

It will be appreciated by a person of ordinary skill in the art that all or some of the procedures of the methods of the foregoing embodiments may be implemented by computer-readable instructions instructing relevant hardware. The computer-readable instructions may be stored in a non-volatile computer-readable storage medium. When the computer-readable instructions are executed, the procedures of the embodiments of the foregoing methods may be included. Any reference to a memory, a database, or another medium used in the embodiments provided in the present disclosure may include at least one of a non-volatile memory or a volatile memory. The non-volatile memory may include a read-only memory (ROM), a magnetic tape, a floppy disk, a flash memory, an optical memory, a high-density embedded non-volatile memory, a resistive random access memory (ReRAM), a magneto resistive random access memory (MRAM), a ferroelectric random access memory (FRAM), a phase change memory (PCM), a graphene memory, or the like. The volatile memory may include a random access memory (RAM) or an external cache. As an illustration rather than a limitation, the RAM is available in various forms, such as a static random access memory (SRAM) or a dynamic random access memory (DRAM). The database involved in the embodiments provided in the present disclosure may include at least one of a relational database and a non-relational database. The non-relational database may include a blockchain-based distributed database, or the like, but is not limited thereto. The processor involved in the embodiments provided in the present disclosure may be a general-purpose processor, a central processing unit, a graphics processing unit, a digital signal processor, a programmable logic device, a quantum computing-based data processing logic device, or the like, but is not limited thereto.

Technical features of the foregoing embodiments may be randomly combined. To make description concise, not all possible combinations of the technical features in the foregoing embodiments are described. However, the combinations of these technical features shall be considered as falling within the scope recorded by this specification provided that no conflict exists.

The foregoing embodiments only describe several implementations of the present disclosure specifically and in detail, but cannot be construed as a limitation to the patent scope of the present disclosure. A person of ordinary skill in the art may make several transformations and improvements without departing from the idea of the present disclosure. These transformations and improvements fall within the protection scope of the present disclosure. Therefore, the protection scope of the patent of the present disclosure shall be subject to the appended claims.

## Claims

1. A method for processing trajectory information, executable a computer device, the method comprising:

     obtaining respective limb trajectory information of at least two first limbs of a first object, wherein the at least two first limbs of the first object correspond to at least two second limbs, respectively, of a second object;
     migrating the limb trajectory information of each first limb to the respective second limb of said first limb to obtain initial trajectory information of each second limb;
     determining, according to the limb trajectory information of each first limb, limb pose information of each first limb and limb coordination information among the at least two first limbs;
     pre-correcting the initial trajectory information of each second limb to obtain predicted pose information of each second limb and predicted coordination information among the at least two second limbs;
     determining a single-limb constraint between each first limb and the respective second limb of said first limb according to the limb pose information of said first limb and the predicted pose information of the respective second limb;
     determining a limb-coordination constraint between the first object and the second object according to the limb coordination information and the predicted coordination information; and correcting the initial trajectory information of all second limbs according to the single-limb constraint of each second limb and the limb-coordination constraint to obtain corrected trajectory information of each second limb.

2. The method according to claim 1, wherein migrating the limb trajectory information of each first limb to the respective second limb of said first limb to obtain the initial trajectory information of each second limb comprises:

determining a first length of each first limb and a second length of each second limb; and adjusting the limb trajectory information of each first limb according to the first length of said first limb and the second length of the respective second limb to obtain the initial trajectory information of the respective second limb.

3. The method according to claim 1 or 2, wherein:

pre-correcting the initial trajectory information of each second limb to obtain the predicted pose information of each second limb and the predicted coordination information among the at least two second limbs comprises, for each iteration:

obtaining a candidate offset; and pre-correcting the initial trajectory information of each second limb according to the candidate offset to obtain the predicted pose information of each second limb and the predicted coordination information among the at least two second limbs; and

correcting the initial trajectory information of all second limbs according to the single-limb constraint of each second limb and the limb-coordination constraint to obtain the corrected trajectory information of each second limb comprises: correcting the initial trajectory information of all second limbs, according to the single-limb constraints for each iteration and the limb-coordination constraint for each iteration, to obtain the corrected trajectory information of each second limb.

4. The method according to claim 3, wherein for each iteration, pre-correcting the initial trajectory information of each second limb according to the candidate offset to obtain the predicted pose information of each second limb and the predicted coordination information among the at least two second limbs comprises:

pre-correcting the initial trajectory information of each second limb according to the candidate offset to obtain predicted trajectory information of each second limb; determining the predicted pose information of each second limb according to the predicted trajectory information of said second limb; and determining the predicted coordination information among the at least two second limbs according to the predicted trajectory information of all second limbs.

5. The method according to claim 4, wherein:

the initial trajectory information of each second limb comprises an initial start position and an initial end position of said second limb, and the predicted trajectory information of each second limb comprises a predicted start position and a predicted end position of said second limb; determining the predicted pose information of each second limb according to the predicted trajectory information of said second limb comprises, for each second limb:

determining a second length of said second limb; and determining the predicted pose information of said second limb according to the predicted start position, the predicted end position, and the second length of said second limb; and

determining the predicted coordination information among the at least two second limbs according to the predicted trajectory information of all second limbs comprises: determining the predicted coordination information among the at least two second limbs according to the predicted start position of all second limbs and the predicted end position of all second limbs.

6. The method according to claim 5, wherein correcting the initial trajectory information of all second limbs, according to the single-limb constraints for each iteration and the limb-coordination constraint for each iteration, to obtain the corrected trajectory information of each second limb comprises, for each second limb:

selecting, from the candidate offsets of all iterations, one or more qualified offsets according to the single-limb constraints of each iteration and the limb-coordination constraint of each iteration; and correcting, according to the one or more qualified offsets, the initial trajectory information of said second limb to obtain the corrected trajectory information of said second limb.

7. The method according to claim 6, further comprising:

determining a limb speed of each first limb according to the limb trajectory information of said first limb;
determining, in each iteration, a predicted speed of each second limb according to the predicted trajectory information of said second limb; and
determining, for each iteration, a temporal constraint between each first limb and the respective second limb of said first limb according to the limb speed of said first limb and the predicted speed of the respective second limb;
wherein selecting, from the candidate offsets of all iterations, one or more qualified offsets according to the single-limb constraints of each iteration and the limb-coordination constraint of each iteration comprises:
selecting the one or more qualified offset according to the single-limb constraint, the limb-coordination constraint, and the temporal constraint, of each iteration.

8. The method according to claim 7, wherein:

the limb trajectory information comprises limb end positions of each first limb of at least two moments, respectively; and
determining the limb speed of each first limb according to the limb trajectory information of said first limb comprises:

determining a first temporal relationship of said first limb between the at least two moments; and
determining the limb speed of said first limb according to the limb end positions of the two moments and the first temporal relationship.

9. The method according to claim 7, wherein:

the initial trajectory information comprises initial end positions of each second limb of at least two moments, respectively, and the predicted trajectory information comprises predicted end positions of each second limb of the at least two moments, respectively; and
determining, in each iteration, the predicted speed of each second limb according to the predicted trajectory information of said second limb comprises, in said iteration:

determining a second temporal relationship of said second limb between the at least two moments; and
determining the predicted speed of the second limb according to the predicted end positions of the second limb of the at least two moments and the second temporal relationship.

10. The method according to claim 7, wherein:

a first limb of the at least two first limbs is connected to a first foot of the first object, and the respective second limb of the first limb is connected to a second foot of the second object; and
determining, for each iteration, the temporal constraint between the first limb and the respective second limb according to the limb speed of the first limb and the predicted speed of the respective second limb comprises:

determining a first foot length of the first foot and a second foot length of the second foot; and
determining the temporal constraint between the first limb and the respective second limb for said iteration according to the limb speed, the first foot length, the second foot length, and the predicted speed of said iteration.

11. The method according to claim 7, wherein selecting the one or more qualified offset according to the single-limb constraint, the limb-coordination constraint, and the temporal constraint, of each iteration comprises, for each second limb:

selecting, from the temporal constraints in all iterations, one or more qualified temporal constraints that satisfy a temporal condition;
determining one or more iterations to which the one or more qualified temporal constraints belong respectively; and
selecting the one or more qualitied candidate offsets from the candidate offsets of the one or more iterations, wherein the single-limb constraints and the limb-coordination constraint in the respective coordination of each qualitied candidate offset satisfy a correction condition.

12. The method according to claim 1, wherein correcting the initial trajectory information of all second limbs according to the single-limb constraint of each second limb and the limb-coordination constraint to obtain the corrected trajectory information of each second limb comprises:

determining a weight parameter of the single-limb constraints of all second limbs and a weight parameter of the limb-coordination constraint;

determining a total constraint of all second limbs according to the limb-coordination constraint, the single-limb constraints, and the weight parameters; and

correcting the initial trajectory information of all second limbs according to the total constraint to obtain the corrected trajectory information of each second limb.

13. The method according to claim 12, wherein:

the limb trajectory information of each first limb comprises a limb start position and a limb end position of said first limb; and

determining the weight parameter of the single-limb constraints of all second limbs and the weight parameter of the limb-coordination constraint comprises:

determining the weight parameter of the single-limb constraints of all second limbs according to the limb start positions and the limb end positions of all first limbs; and

determining the weight parameter of the limb-coordination constraint according to the weight parameter of the single-limb constraints.

14. The method according to any one of claims 1 to 13, wherein:

the limb trajectory information of each first limb comprises a limb start position and a limb end position of said first limb; and

determining, according to the limb trajectory information of each first limb, the limb pose information of each first limb and the limb coordination information among the at least two first limbs comprises, for each first limb:

determining a first length of said first limb;

determining the limb pose information of said first limb according to the limb start position, the limb end position, and the first length of the first limb; and

determining the limb coordination information among the at least two first limbs according to the limb start position and the limb end position of each first limb.

15. The method according to any one of claims 1 to 14, wherein:

each first limb comprises a first joint chain, and the first joint chain comprises connected joints of the first object and parts among the connected joints of the first object;

each second limb comprises a second joint chain, and the second joint chain comprises connected joints of the second object and parts among the connected joints of the second object;

the single-limb constraint is a constraint between the first joint chain and the second joint chain; and

the limb-coordination constraint is a constraint between coordination and second coordination, the first coordination indicates a relationship among the at least two first joint chains, and the second coordination indicates a relationship among the at least two second joint chains.

16. An apparatus for processing trajectory information, comprising:

a migration module, configured to:

obtain respective limb trajectory information of at least two first limbs of a first object, wherein the at least two first limbs of the first object correspond to at least two second limbs, respectively, of a second object; and migrate the limb trajectory information of each first limb to the respective second limb of said first limb to obtain initial trajectory information of each second limb;

a prediction module, configured to:

determine, according to the limb trajectory information of each first limb, limb pose information of each first limb and limb coordination information among the at least two first limbs; and pre-correct the initial trajectory information of each second limb to obtain predicted pose information of each second limb and predicted coordination information among the at least two second limbs;

a first generation module, configured to determine a single-limb constraint between each first limb and the respective second limb of said first limb according to the limb pose information of said first limb and the predicted pose information of the respective second limb;

a second generation module, configured to determine a limb-coordination constraint between the first object and the second object according to the limb coordination information and the predicted coordination information; and

a correction module, configured to correct the initial trajectory information of all second limbs according to the single-limb constraint of each second limb and the limb-coordination constraint to obtain corrected trajectory information of each second limb.

17. A computer device, comprising a memory and a processor, the memory having computer-readable instructions stored therein, and the processor, when executing the computer-readable instructions, implementing the method according to any one of claims 1 to 15.

18. A computer-readable storage medium, having computer-readable instructions stored therein, the computer-readable instructions, when executed by a processor, implementing the method according to any one of claims 1 to 15.

19. A computer program product, comprising computer-readable instructions, the computer-readable instructions, when executed by a processor, implementing the method according to any one of claims 1 to 15.

104

Server

Data storage
system

...

Network

102

Terminal

For example

FIG. 1

~ S202

Obtain respective limb trajectory information of at least two first limbs of a first object, where the at least two first limbs of the first object correspond to at least two second limbs, respectively, of a second object

~ S204

Migrate the limb trajectory information of each first limb to the respective second limb of said first limb to obtain initial trajectory information of each second limb

~ S206

Determine, according to the limb trajectory information of each first limb, limb pose information of each first limb and limb coordination information among the at least two first limbs

~ S208

Pre-correct the initial trajectory information of each second limb to obtain predicted pose information of each second limb and predicted coordination information among the at least two second limbs

~ S210

Determine a single-limb constraint between each first limb and the respective second limb of said first limb according to the limb pose information of said first limb and the predicted pose information of the respective second limb

~ S212

Determine a limb-coordination constraint between the first object and the second object according to the limb coordination information and the predicted coordination information

~ S214

Correct the initial trajectory information of all second limbs according to the single-limb constraint of each second limb and the limb-coordination constraint to obtain corrected trajectory information of each second limb

FIG. 2

FIG. 3

FIG. 4

S502

Determine a limb speed of each first limb according to the limb trajectory information of such first limb

S504

Determine, in each iteration, a predicted speed of each second limb according to the predicted trajectory information of such second limb

S506

Determine, for each iteration, a temporal constraint between each first limb and the respective second limb of such first limb according to the limb speed of such first limb and the predicted speed of the respective second limb

S508

Select the qualified offset(s) according to the single-limb constraint, the limb-coordination constraint, and the temporal constraint, of each iteration

FIG. 5

S602

Select, from the temporal constraints in all iterations, qualified temporal constraint(S) that satisfy a temporal condition for each second limb

S604

Determine, for each second limb, iteration(s) to which the qualified temporal constraint(s) belong respectively

S606

Select, for each second limb, the qualitied candidate offset(s) from the candidate offset(s) of the iteration(s), wherein the single-limb constraints and the limb-coordination constraint in the respective coordination of each qualitied candidate offset satisfy a correction condition

FIG. 6

| Footstep trajectory migration procedure | | | |
|---|---|---|---|
| Preliminary foot trajectory adjustment | Joint chain constraint construction | Timing constraint construction | Optimization problem solving |

First object Foot trajectory

Single-joint-chain constraint | Multi-joint-chain constraint

Second object Foot trajectory

## FIG. 7

Crotch joint
(Start point of joint chain)

Single-joint chain constraint

Knee joint

Ankle joint
(End point of joint chain)

## FIG. 8

FIG. 9

$$v_j^k = \frac{Pe_j^k - Ps_j^k}{L_j} \qquad\qquad v_{ij}^k = \frac{Pe_i^k - Pe_j^k}{||Ps_i^k - Ps_j^k||}$$

$$C_{sc}^k = \sum_{j=0}^{M} ||v_j^k - \tilde{v}_j^k|| \qquad\qquad C_{mc}^k = \sum_{i=0}^{M}\sum_{j=0}^{M} ||v_{ij}^k - \tilde{v}_{ij}^k|| \; (i \neq j)$$

$$C_{hc}^k = w_k C_{sc}^k + (1 - w_k)C_{mc}^k \longleftarrow w_k = min(1, \frac{||Pe_i^k - Pe_j^k||}{2 \cdot Ls_{ij}})$$

$$C_{hc}^k$$

FIG. 10

Ankle joint

FIG. 11

Apparatus 1200 for processing trajectory information

1202

Migration module

1204

Prediction module

1206

First generation module

1208

Second generation module

1210

Correction module

FIG. 12

FIG. 13

## INTERNATIONAL SEARCH REPORT

| International application No. |
|---|
| **PCT/CN2023/131147** |

### A. CLASSIFICATION OF SUBJECT MATTER

G06T 13/40(2011.01)i

According to International Patent Classification (IPC) or to both national classification and IPC

### B. FIELDS SEARCHED

Minimum documentation searched (classification system followed by classification symbols)

IPC:G06T,G06F

Documentation searched other than minimum documentation to the extent that such documents are included in the fields searched

Electronic data base consulted during the international search (name of data base and, where practicable, search terms used)

ENTXTC, CNTXT, ENTXT, CNKI, DWPI, IEEE: 轨迹, 迁移, 复制, 肢, 约束, 对应, 姿态, 交互, 预测, 长度, 校正, trajectory, migration, copy, body, constraints, pose, interact+, predict+, length, correct+

### C. DOCUMENTS CONSIDERED TO BE RELEVANT

| Category* | Citation of document, with indication, where appropriate, of the relevant passages | Relevant to claim No. |
|---|---|---|
| PX | CN 116977503 A (TENCENT TECHNOLOGY (SHENZHEN) CO., LTD.) 31 October 2023 (2023-10-31) claims 1-15, and description, paragraphs 2-290 | 1-19 |
| A | WO 2022242038 A1 (SHENZHEN TETRAS.AI TECHNOLOGY CO., LTD.) 24 November 2022 (2022-11-24) entire document | 1-19 |
| A | CN 113705295 A (INSTITUTE OF COMPUTING TECHNOLOGY, CHINESE ACADEMY OF SCIENCES et al.) 26 November 2021 (2021-11-26) entire document | 1-19 |
| A | CN 111694429 A (BEIJING BAIDU NETCOM SCIENCE AND TECHNOLOGY CO., LTD.) 22 September 2020 (2020-09-22) entire document | 1-19 |
| A | WO 2023279704 A1 (SHANGHAI SENSETIME INTELLIGENT TECHNOLOGY CO., LTD.) 12 January 2023 (2023-01-12) entire document | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 January 2024** | **02 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/131147**

| Patent document cited in search report | | | Publication date (day/month/year) | Patent family member(s) | | | Publication date (day/month/year) |
|---|---|---|---|---|---|---|---|
| CN | 116977503 | A | 31 October 2023 | None | | | |
| WO | 2022242038 | A1 | 24 November 2022 | KR | 20230035385 | A | 13 March 2023 |
| | | | | JP | 2023540577 | A | 25 September 2023 |
| | | | | TW | 202247104 | A | 01 December 2022 |
| | | | | TWI | 795116 | B | 01 March 2023 |
| | | | | CN | 113313794 | A | 27 August 2021 |
| | | | | CN | 113313794 | B | 08 November 2022 |
| | | | | HK | 40051714 | A0 | 14 January 2022 |
| | | | | HK | 40051714 | A1 | 10 March 2023 |
| CN | 113705295 | A | 26 November 2021 | None | | | |
| CN | 111694429 | A | 22 September 2020 | KR | 20210036879 | A | 05 April 2021 |
| | | | | EP | 3825962 | A2 | 26 May 2021 |
| | | | | JP | 2021103564 | A | 15 July 2021 |
| | | | | EP | 3825962 | A3 | 13 October 2021 |
| | | | | US | 2021383607 | A1 | 09 December 2021 |
| | | | | US | 11532127 | B2 | 20 December 2022 |
| | | | | JP | 7273880 | B2 | 15 May 2023 |
| | | | | CN | 111694429 | B | 02 June 2023 |
| | | | | KR | 102590841 | B1 | 19 October 2023 |
| WO | 2023279704 | A1 | 12 January 2023 | TW | 202304211 | A | 16 January 2023 |
| | | | | CN | 113422977 | A | 21 September 2021 |
| | | | | HK | 40055493 | A0 | 11 March 2022 |
| | | | | CN | 113422977 | B | 14 March 2023 |

Form PCT/ISA/210 (patent family annex) (July 2022)

**REFERENCES CITED IN THE DESCRIPTION**

**Patent documents cited in the description**

- CN 2023101639863